# EUROPEAN PATENT SPECIFICATION

(11) **EP 4 278 525 B1**
(45) Date of publication and mention of the grant of the patent: **06.08.2025**
(21) Application number: 21918554.3
(22) Date of filing: 15.01.2021
(51) Int. Cl.: H04L 5/00, H04L 1/1829, H04L 1/1867, H04L 1/00

(54) **METHOD AND APPARATUS FOR HARQ-ACK CODEBOOK DETERMINATION**
VERFAHREN UND VORRICHTUNG ZUR BESTIMMUNG EINES HARQ-ACK-CODEBUCHS
PROCÉDÉ ET APPAREIL DE DÉTERMINATION DE LIVRE DE CODES HARQ-ACK

(43) Date of publication of application: 22.11.2023
(73) Proprietor: Lenovo (Beijing) Limited, Beijing 100085 (CN)
(72) Inventor: LEI, Haipeng, Beijing 100082 (CN)
(74) Representative: Openshaw & Co.
(86) International application number: PCT/CN2021/072138
(87) International publication number: WO 2022/151347

(56) References cited:
- EP-A1- 3 832 938
- WO-A1-2020/048364
- CN-A- 109 639 398
- CN-A- 110 351 022
- CN-A- 111 436 153
- US-A1- 2020 229 179
- US-B2- 8 805 448
- NOKIA, NOKIA SHANGHAI BELL: "Remaining issues on NR-U HARQ scheduling and feedback", 3GPP DRAFT; R1-2002227, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Online Meeting ;20200420 - 20200430, 10 April 2020 (2020-04-10), Mobile Competence Centre ; 650, route des Lucioles ; F-06921 Sophia-Antipolis Cedex ; France , XP051873488

## Description

### TECHNICAL FIELD

Embodiments of the present disclosure generally relate to wireless communication technology, and more particularly to hybrid automatic repeat request acknowledgement (HARQ-ACK) codebook determination.

### BACKGROUND

Wireless communication systems are widely deployed to provide various telecommunication services such as telephony, video, data, messaging, broadcasts, and so on. Wireless communication systems may employ multiple access technologies capable of supporting communication with multiple users by sharing available system resources (e.g., time, frequency, and power). Examples of wireless communication systems may include fourth generation (4G) systems such as long term evolution (LTE) systems, LTE-advanced (LTE-A) systems, or LTE-A Pro systems, and fifth generation (5G) systems which may also be referred to as new radio (NR) systems.

In a wireless communication system, a base station (BS) may transmit data signals to user equipment (UE) via a physical downlink shared channel (PDSCH). The PDSCH transmission to the UE may be a dynamic PDSCH or a semi-persistent scheduling (SPS) PDSCH. In dynamic scheduling, a BS may transmit, to a UE, downlink control information (DCI) (e.g., DCI format 1_0 or DCI format 1_1) via a corresponding physical downlink control channel (PDCCH). In SPS, a PDSCH transmission is configured for a UE by a BS through higher layer signaling, such as, for example, radio resource control (RRC) signaling. The transmission may occur at predetermined time instances and with predetermined parameters, as informed by the higher layer signaling or the DCI for activating the SPS transmission. The BS may transmit a DCI format for a SPS PDSCH release to the UE.

A UE may transmit hybrid automatic repeat request acknowledgement (HARQ-ACK) feedback (e.g., included in a HARQ-ACK codebook) corresponding to PDSCH transmissions through a physical uplink control channel (PUCCH) or a physical uplink shared channel (PUSCH).

There is a need for handling HARQ-ACK codebook determination in a wireless communication system.

WO2020048364A1 discloses a method for transmitting and receiving HARQ-ACK information, and a communication apparatus. The method comprises: a terminal device generating at least two pieces of HARQ-ACK information based on multiple received PDSCHs, and transmitting the at least two pieces of HARQ-ACK information to a network device. Each piece of HARQ-ACK information comprises an ACK or a NACK fed back for one or more PDSCHs; and where a certain piece of HARQ-ACK information comprises an ACK or a NACK fed back for multiple PDSCHs, at least one of the following of the multiple PDSCHs corresponding to the HARQ-ACK information is the same: a port group to which a port of a DMRS for demodulating a PUSCH belongs, an identifier of an enabled transport block carried by the multiple PDSCHs, and a PDCCH configuration of the multiple PDSCHs for scheduling the multiple PDSCHs.

US8805448B2 discloses a base station which includes a transmit path circuitry to scramble CRC bits of a DCI format using a C-RNTI for dynamic scheduling, and scramble the CRC bits of the DCI format using an SPS C-RNTI for semi-persistent scheduling. If C-RNTI is used, the circuitry generates a downlink transmission grant using the DCI format being a fallback format to indicate a transmit diversity transmission scheme or a single-layer beamforming scheme, and uses the DCI format being a dual-layer beamforming format to indicate a dual-DRS port transmission scheme or a single-DRS port transmission scheme. If SPS C-RNTI is used, the circuitry generates a downlink transmission grant using the DCI format being the fallback format to indicate a single-DRS port transmission scheme, and uses the DCI format being the dual-layer beamforming format to indicate a dual-DRS port transmission scheme or a single-DRS port transmission scheme.

### SUMMARY

The invention is defined by the appended independent claims.

Some embodiments of the present disclosure provide a method for wireless communication performed by a user equipment (UE). The method may include: receiving a first plurality of downlink control information (DCI) formats for scheduling a first group of physical downlink shared channels (PDSCHs) and a second plurality of DCI formats for scheduling a second group of PDSCHs, wherein a cyclic redundancy check (CRC) of each of the first plurality of DCI formats is scrambled by a first radio network temporary identifier (RNTI) and a CRC of each of the second plurality of DCI formats is scrambled by a second RNTI different from the first RNTI, and wherein hybrid automatic repeat request acknowledgement (HARQ-ACK) feedback for the first group of PDSCHs and HARQ-ACK feedback for the second group of PDSCHs are to be transmitted in a same HARQ-ACK codebook; generating a first HARQ-ACK sub-codebook for the first group of PDSCHs and a second HARQ-ACK sub-codebook for the second group of PDSCHs; and transmitting the HARQ-ACK codebook including the first HARQ-ACK sub-codebook and the second HARQ-ACK sub-codebook.

Some embodiments of the present disclosure provide a method for wireless communication performed by a base station (BS). The method may include: transmitting, to a group of user equipment (UE) including a first UE, a first plurality of downlink control information (DCI) formats for scheduling a first group of physical downlink shared channels (PDSCHs); transmitting, to the first UE, a second plurality of DCI formats for scheduling a second group of PDSCHs, wherein a cyclic redundancy check (CRC) of each of the first plurality of DCI formats is scrambled by a first radio network temporary identifier (RNTI) and a CRC of each of the second plurality of DCI formats is scrambled by a second RNTI different from the first RNTI; and receiving, from the first UE, a HARQ-ACK codebook including a first HARQ-ACK sub-codebook for the first group of PDSCHs and a second HARQ-ACK sub-codebook for the second group of PDSCHs.

Some embodiments of the present disclosure provide an apparatus. According to some embodiments of the present disclosure, the apparatus may include: at least one non-transitory computer-readable medium having stored thereon computer-executable instructions; at least one receiving circuitry; at least one transmitting circuitry; and at least one processor coupled to the at least one non-transitory computer-readable medium, the at least one receiving circuitry and the at least one transmitting circuitry, wherein the at least one non-transitory computer-readable medium and the computer executable instructions may be configured to, with the at least one processor, cause the apparatus to perform a method according to some embodiments of the present disclosure.

### BRIEF DESCRIPTION OF THE DRAWINGS

In order to describe the manner in which the advantages and features of the disclosure can be obtained, a description of the disclosure is rendered by reference to specific embodiments thereof, which are illustrated in the appended drawings. These drawings depict only exemplary embodiments of the disclosure and are not therefore to be considered limiting of its scope.
FIG. 1 illustrates a schematic diagram of a wireless communication system in accordance with some embodiments of the present disclosure;
FIG. 2 illustrates a conceptual diagram of multiplexing HARQ-ACK feedback for PDSCHs scheduled by the UE-specific DCI formats and HARQ-ACK feedback for PDSCHs scheduled by the group-common DCI formats on a PUSCH in accordance with some embodiments of the present disclosure;
FIG. 3 illustrates a conceptual diagram of multiplexing HARQ-ACK feedback for PDSCHs scheduled by the UE-specific DCI formats and HARQ-ACK feedback for PDSCHs scheduled by the group-common DCI formats on a PUSCH in accordance with some embodiments of the present disclosure;
FIG. 4-9 illustrate exemplary HARQ-ACK codebooks in accordance with some embodiments of the present disclosure;
FIG. 10 illustrates a flow chart of an exemplary procedure of wireless communications in accordance with some embodiments of the present disclosure;
FIG. 11 illustrates a flow chart of an exemplary procedure of wireless communications in accordance with some embodiments of the present disclosure; and
FIG. 12 illustrates a block diagram of an exemplary apparatus in accordance with some embodiments of the present disclosure.

### DETAILED DESCRIPTION

The detailed description of the appended drawings is intended as a description of the preferred embodiments of the present disclosure and is not intended to represent the only form in which the present disclosure may be practiced. It should be understood that the same or equivalent functions may be accomplished by different embodiments that are intended to be encompassed within the scope of the present disclosure.

Reference will now be made in detail to some embodiments of the present disclosure, examples of which are illustrated in the accompanying drawings. To facilitate understanding, embodiments are provided under specific network architecture and new service scenarios, such as the 3rd generation partnership project (3GPP) 5G (NR), 3GPP long-term evolution (LTE) Release 8, and so on. It is contemplated that along with the developments of network architectures and new service scenarios, all embodiments in the present disclosure are also applicable to similar technical problems; and moreover, the terminologies recited in the present disclosure may change, which should not affect the principles of the present disclosure.

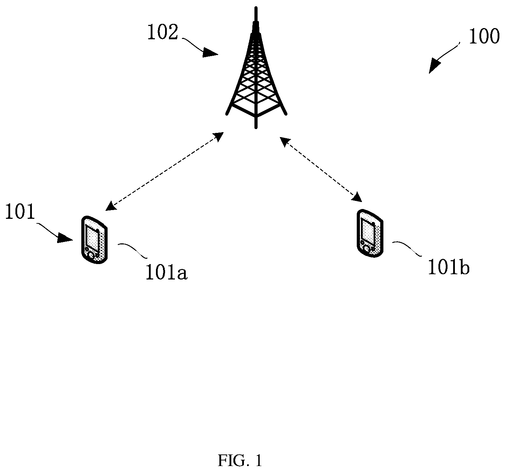

FIG. 1 illustrates a schematic diagram of a wireless communication system 100 in accordance with some embodiments of the present disclosure.

As shown in FIG. 1, a wireless communication system 100 may include some UEs 101 (e.g., UE 101a and UE 101b) and a base station (e.g., BS 102). Although a specific number of UEs 101 and BS 102 are depicted in FIG. 1, it is contemplated that any number of UEs and BSs may be included in the wireless communication system 100.

The UE(s) 101 may include computing devices, such as desktop computers, laptop computers, personal digital assistants (PDAs), tablet computers, smart televisions (e.g., televisions connected to the Internet), set-top boxes, game consoles, security systems (including security cameras), vehicle on-board computers, network devices (e.g., routers, switches, and modems), or the like. According to some embodiments of the present disclosure, the UE(s) 101 may include a portable wireless communication device, a smart phone, a cellular telephone, a flip phone, a device having a subscriber identity module, a personal computer, a selective call receiver, or any other device that is capable of sending and receiving communication signals on a wireless network. In some embodiments of the present disclosure, the UE(s) 101 includes wearable devices, such as smart watches, fitness bands, optical head-mounted displays, or the like. Moreover, the UE(s) 101 may be referred to as a subscriber unit, a mobile, a mobile station, a user, a terminal, a mobile terminal, a wireless terminal, a fixed terminal, a subscriber station, a user terminal, or a device, or described using other terminology used in the art. The UE(s) 101 may communicate with the BS 102 via uplink (UL) communication signals.

The BS 102 may be distributed over a geographic region. In certain embodiments of the present disclosure, the BS 102 may also be referred to as an access point, an access terminal, a base, a base unit, a macro cell, a Node-B, an evolved Node B (eNB), a gNB, a Home Node-B, a relay node, or a device, or described using other terminology used in the art. The BS 102 is generally a part of a radio access network that may include one or more controllers communicably coupled to one or more corresponding BSs 102. The BS 102 may communicate with UE(s) 101 via downlink (DL) communication signals.

The wireless communication system 100 may be compatible with any type of network that is capable of sending and receiving wireless communication signals. For example, the wireless communication system 100 is compatible with a wireless communication network, a cellular telephone network, a time division multiple access (TDMA)-based network, a code division multiple access (CDMA)-based network, an orthogonal frequency division multiple access (OFDMA)-based network, an LTE network, a 3GPP-based network, a 3GPP 5G network, a satellite communications network, a high altitude platform network, and/or other communications networks.

In some embodiments of the present disclosure, the wireless communication system 100 is compatible with the 5G NR of the 3GPP protocol. For example, BS 102 may transmit data using an orthogonal frequency division multiple (OFDM) modulation scheme on the DL and the UE(s) 101 may transmit data on the UL using a discrete Fourier transform-spread-orthogonal frequency division multiplexing (DFT-S-OFDM) or cyclic prefix-OFDM (CP-OFDM) scheme. More generally, however, the wireless communication system 100 may implement some other open or proprietary communication protocols, for example, WiMAX, among other protocols.

In some embodiments of the present disclosure, the BS 102 and UE(s) 101 may communicate using other communication protocols, such as the IEEE 802.11 family of wireless communication protocols. Further, in some embodiments of the present disclosure, the BS 102 and UE(s) 101 may communicate over licensed spectrums, whereas in some other embodiments, the BS 102 and UE(s) 101 may communicate over unlicensed spectrums. The present disclosure is not intended to be limited to the implementation of any particular wireless communication system architecture or protocol.

In some embodiments of the present disclosure, the wireless communication system 100 may support multicast and broadcast services (MBSs). For example, one or more UEs (e.g., UE 101a and UE 101b) may be grouped as a MBS group to receive MBSs (e.g., a MBS PDSCH) from a BS (e.g., BS 102). Several transmission schemes including, but not limited to, the following three transmission schemes may be applied for multicast transmission: a point-to-point (PTP) transmission scheme, point-to-multipoint (PTM) transmission scheme 1, and PTM transmission scheme 2.

Under the PTP transmission scheme, RRC_CONNECTED UEs may use a UE-specific PDCCH with a cyclic redundancy check (CRC) scrambled by a UE-specific radio network temporary identifier (RNTI) (e.g., cell-RNTI (C-RNTI)) to schedule a UE-specific PDSCH which is scrambled by the same UE-specific RNTI.

Under PTM transmission scheme 1, RRC_CONNECTED UEs in the same MBS group may use a group-common PDCCH with a cyclic redundancy check (CRC) scrambled by a group-common radio network temporary identifier (RNTI) to schedule a group-common PDSCH which is scrambled by the same group-common RNTI. This scheme may also be referred to as a group-common PDCCH based group scheduling scheme.

Under PTM transmission scheme 2, RRC_CONNECTED UEs in the same MBS group may use a UE-specific PDCCH with a CRC scrambled by a UE-specific RNTI (e.g., C-RNTI) to schedule a group-common PDSCH which is scrambled by a group-common RNTI. This scheme may also be referred to as a UE-specific PDCCH based group scheduling scheme.

The "group-common PDCCH/PDSCH" may mean that the PDCCH or PDSCH is transmitted on the common time and/or frequency resources, and can be identified by all the UEs in the same MBS group. The "UE-specific PDCCH / PDSCH" may mean that the PDCCH or PDSCH can only be identified by the target UE, but cannot be identified by other UEs in the same MBS group with the target UE.

For RRC_CONNECTED UEs receiving multicast transmissions, at least for PTM transmission scheme 1 among the multicast transmission schemes, at least one of the following may be supported: (1) acknowledgement (ACK)/ negative ACK (NACK) based HARQ-ACK feedback for multicast, and (2) NACK-only based HARQ-ACK feedback for multicast.

For RRC_CONNECTED UEs in the same MBS group, according to PTM transmission scheme 1, a group-common DCI format with a CRC scrambled by a group-common RNTI (e.g., group-RNTI (G-RNTI)) is used to schedule a group-common PDSCH which is scrambled with the same group-common RNTI.

Fallback DCI format 1_0, non-fallback DCI format 1_1, and non-fallback DCI format 1_2 could be used as the group-common DCI format. Since the existing downlink assignment indicator (DAI) is updated per UE, the DAI in the group-common DCI format for multicast should be counted separately from the DAI in the UE-specific DCI format. Accordingly, the HARQ-ACK feedback for PDSCHs scheduled by UE-specific DCI formats is supposed to be generated in a different HARQ-ACK codebook from the HARQ-ACK feedback for PDSCHs scheduled by the group-common DCI formats.

Nevertheless, under certain circumstances, the HARQ-ACK feedback for PDSCHs scheduled by the group-common DCI formats may be transmitted in the same slot (e.g., via the same PUCCH transmission) with the HARQ-ACK feedback for PDSCHs scheduled by the UE-specific DCI formats. In this scenario, the HARQ-ACK feedback associated with the group-common DCI formats and the HARQ-ACK feedback associated with the UE-specific DCI formats should be multiplexed in one HARQ-ACK codebook. For example, the HARQ-ACK feedback for PDSCHs scheduled by the UE-specific DCI formats may be multiplexed in one sub-codebook and the HARQ-ACK feedback for PDSCHs scheduled by the group-common DCI formats may be multiplexed in another sub-codebook. Then, the two sub-codebooks are concatenated as the final HARQ-ACK codebook.

Under certain circumstances, error cases may happen in practical transmissions due to separate DAI counting and separate HARQ-ACK sub-codebooks, which would lead to an ambiguity in the HARQ-ACK codebook. For example, assuming that in the final HARQ-ACK codebook, the HARQ-ACK sub-codebook for PDSCHs scheduled by UE-specific DCI formats is placed firstly, and then followed by the HARQ-ACK sub-codebook for PDSCHs scheduled by the group-common DCI formats, when a UE misses the last UE-specific DCI format scheduling a corresponding PDSCH for unicast transmission, a misunderstanding of the HARQ-ACK codebook may happen between the BS and the UE.

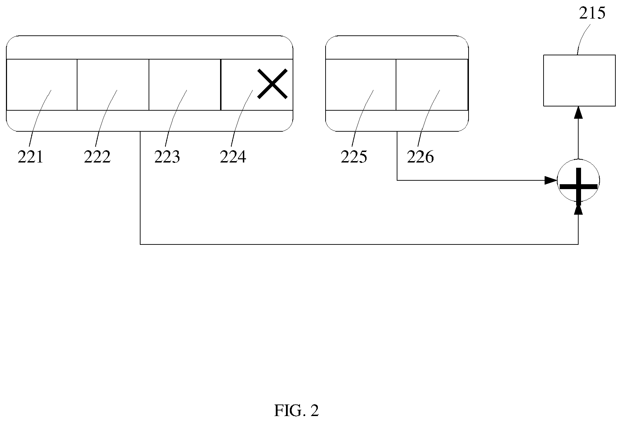

FIG. 2 illustrates a conceptual diagram of multiplexing HARQ-ACK feedback for PDSCHs scheduled by the UE-specific DCI formats and HARQ-ACK feedback for PDSCHs scheduled by the group-common DCI formats on a PUSCH in accordance with some embodiments of the present disclosure.

It should be understood that the configurations or parameters mentioned in the following text are only for illustrative purposes, and should not be construed as limiting the embodiments of the present disclosure. Also, details described in all of the foregoing embodiments of the present disclosure are applicable for the embodiments shown in FIG. 2.

In FIG. 2, a BS may transmit four UE-specific DCI formats to schedule four PDSCHs (e.g., PDSCHs 221-224) and two group-common DCI formats to schedule two PDSCHs (e.g., PDSCHs 225 and 226). The BS may indicate that HARQ-ACK feedback for these six PDSCHs is to be transmitted in the same slot (e.g., in the same PUCCH transmission). When no error case happens, in the final HARQ-ACK codebook, a HARQ-ACK sub-codebook (hereinafter, "HARQ-ACK sub-codebook #1") may include HARQ-ACK information bits (i.e., HARQ-ACK feedback) for PDSCHs 221-224, and another HARQ-ACK sub-codebook (hereinafter, "HARQ-ACK sub-codebook #2") may include HARQ-ACK information bits (i.e., HARQ-ACK feedback) for PDSCHs 225 and 226.

Assuming that each of the PDSCHs corresponds to one respective HARQ-ACK information bit, if no error case happens, the UE may transmit a HARQ-ACK codebook, for example, {a0, a1, a2, a3, b0, b1}, to the BS in a certain slot on PUCCH 215. In the HARQ-ACK codebook, a0, a1, a2 and a3 denote HARQ-ACK information bits for PDSCHs 221-224, and b0 and b1 denote HARQ-ACK information bits for PDSCHs 225 and 226.

The UE cannot identify the error case where a DCI format scheduling PDSCH 224 has been missed by the UE. This is because this DCI format is the last DCI format among the UE-specific DCI formats. In this scenario, the UE may transmit a wrong HARQ-ACK codebook, for example, {a0, a1, a2, b0, b1}, to the BS. The BS and UE thus have different understandings of the size of the HARQ-ACK codebook. As a result, the BS may not successfully decode the encoded HARQ-ACK information bits.

Furthermore, some HARQ-ACK information bits in the HARQ-ACK codebook are placed in the wrong positions due to a missed DCI format, which would also lead to erroneous HARQ-ACK feedback.

For example, in the wrong HARQ-ACK codebook {a0, a1, a2, b0, b1}, since HARQ-ACK information bit a3 is not included in the final HARQ-ACK codebook, the BS may misunderstand b0 and b1 as the HARQ-ACK feedback for PDSCH 224 and PDSCH 225, respectively. That is, the HARQ-ACK information bits for PDSCHs scheduled by the group-common DCI formats are shifted one bit forward. Such misunderstanding between the UE and the BS would cause an unnecessary PDSCH retransmission by the BS, especially for PDSCHs scheduled by the group-common DCI formats. As a result, DL performance may be greatly degraded.

In some other examples, assuming that in the final HARQ-ACK codebook, the HARQ-ACK sub-codebook for PDSCHs scheduled by group-common DCI formats is placed firstly, and then followed by the HARQ-ACK sub-codebook for PDSCHs scheduled by the UE-specific DCI formats, when a UE misses the last group-common DCI formats scheduling a corresponding PDSCH for multicast transmission, a misunderstanding of the HARQ-ACK codebook may happen between the BS and the UE.

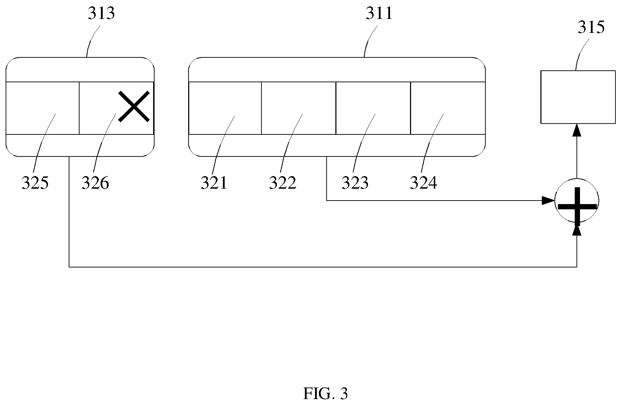

FIG. 3 illustrates a conceptual diagram of multiplexing HARQ-ACK feedback for PDSCHs scheduled by the UE-specific DCI formats and HARQ-ACK feedback for PDSCHs scheduled by the group-common DCI formats on a PUSCH in accordance with some embodiments of the present disclosure.

It should be understood that configurations or parameters mentioned in the following text are only for illustrative purposes, and should not be construed as limiting the embodiments of the present disclosure. Also, details described in all of the foregoing embodiments of the present disclosure are applicable for the embodiments shown in FIG. 3.

In FIG. 3, a BS may transmit four UE-specific DCI formats to schedule four PDSCHs (e.g., PDSCHs 321-324) and two group-common DCI formats to schedule two PDSCHs (e.g., PDSCHs 325 and 326). The BS may indicate that HARQ-ACK feedback for these six PDSCHs is to be transmitted in the same slot (e.g., in the same PUCCH transmission). When no error case happens, in the final HARQ-ACK codebook, a HARQ-ACK sub-codebook (hereinafter, "HARQ-ACK sub-codebook #1'") may include HARQ-ACK information bits (i.e., HARQ-ACK feedback) for PDSCHs 325 and 326, and another HARQ-ACK sub-codebook (hereinafter, "HARQ-ACK sub-codebook #2'") may include HARQ-ACK information bits (i.e., HARQ-ACK feedback) for PDSCHs 321-324.

Assuming that each of the PDSCHs corresponds to one respective HARQ-ACK information bit, if no error case happens, the UE may transmit a HARQ-ACK codebook, for example, {b0', b1', a0', a1', a2', a3'}, to the BS in a slot on PUCCH 315. In the HARQ-ACK codebook, b0' and b1' denote HARQ-ACK information bits for PDSCHs 325 and 326, and a0', a1', a2', and a3' denote HARQ-ACK information bits for PDSCHs 321-324.

The UE cannot identify the error case where a DCI format scheduling PDSCH 326 has been missed by the UE. This is because this DCI format is the last DCI format among the group-common DCI formats. In this scenario, the UE may transmit a wrong HARQ-ACK codebook, for example, {b0', a0', a1', a2', a3'}, to the BS. The BS and UE thus have different understandings of the size of the HARQ-ACK codebook. As a result, the BS may not successfully decode the encoded HARQ-ACK information bits.

Furthermore, some HARQ-ACK information bits in the HARQ-ACK codebook are placed in the wrong positions due to the missed DCI format, which would also lead to erroneous HARQ-ACK feedback.

For example, in the wrong HARQ-ACK codebook {b0', a0', a1', a2', a3'}, since HARQ-ACK information bit b1' is not included in the final HARQ-ACK codebook, the BS may misunderstand a0', a1', a2', and a3' as the HARQ-ACK feedback for PDSCH 326, PDSCH 321, PDSCH 322, and PDSCH 323, respectively. That is, the HARQ-ACK information bits for PDSCHs scheduled by the UE-specific DCI formats are shifted one bit forward. Such misunderstanding between the UE and the BS would cause an unnecessary PDSCH retransmission by the BS, especially for PDSCHs scheduled by the UE-specific DCI formats. As a result, DL performance may be greatly degraded.

Embodiments of present disclosure further provide solutions to solve the above problem caused by any misunderstanding of the HARQ-ACK codebook between a BS and a UE. For example, solutions to solve the misunderstanding between a BS and a UE on the HARQ-ACK codebook determination when the HARQ-ACK feedback for PDSCHs scheduled by the group-common DCI formats (e.g., a DCI format with a CRC scrambled by a group-common RNTI (e.g., G-RNTI) for multicast transmission) is to be transmitted in the same slot with the HARQ-ACK feedback for PDSCHs scheduled by the UE-specific DCI formats (e.g., a DCI format with a CRC scrambled by a UE-specific RNTI (e.g., C-RNTI)). More details on the embodiments of the present disclosure will be illustrated in the following text in combination with the appended drawings.

In some embodiments of the present disclosure, at a UE, the PDSCHs with corresponding HARQ-ACK feedback to be transmitted in the same HARQ-ACK codebook may be divided into two PDSCH groups. For example, one group (hereinafter, "PDSCH group #1") may include the PDSCHs scheduled by the group-common DCI formats or the UE-specific DCI formats, which are hereinafter referred to as "group-common DCI group" or "UE-specific DCI group," respectively. Another group (hereinafter, "PDSCH group #2") may include the PDSCHs scheduled by another DCI group, i.e., the UE-specific DCI group or the group-common DCI group.

The HARQ-ACK codebook may include two HARQ-ACK sub-codebooks. One sub-codebook (hereinafter, "sub-codebook #1") may include HARQ-ACK information bits (i.e., HARQ-ACK feedback) for PDSCH group #1, and another sub-codebook (hereinafter, "sub-codebook #2") may include HARQ-ACK information bits for PDSCH group #2. In some examples, sub-codebook #1 may be placed in the front of the HARQ-ACK codebook, followed by sub-codebook #2. In some other examples, sub-codebook #2 may be placed in the front of the HARQ-ACK codebook, followed by sub-codebook #1.

The HARQ-ACK information bits in each sub-codebook may be ordered independently according to the DAIs indicated in the corresponding DCI formats. For example, the HARQ-ACK information bits for PDSCHs scheduled by the UE-specific DCI formats in a sub-codebook is arranged according to the DAIs indicated in the UE-specific DCI formats. The HARQ-ACK information bits for PDSCHs scheduled by the group-common DCI formats in a sub-codebook is arranged according to the DAIs indicated in the group-common DCI formats.

In some embodiments of the present disclosure, a UE-specific DCI format of the UE-specific DCI group may indicate (hereinafter, "sub-codebook indication") the number of PDSCH groups with corresponding HARQ-ACK feedback to be multiplexed in the HARQ-ACK codebook, i.e., one group of PDSCHs scheduled by UE-specific DCI formats, or two groups of PDSCHs with one group scheduled by UE-specific DCI formats and another group scheduled by group-common DCI formats. In some other embodiments of the present disclosure, the sub-codebook indication in a UE-specific DCI format of the UE-specific DCI group may indicate the number of HARQ-ACK sub-codebooks in the HARQ-ACK codebook, i.e., one HARQ-ACK sub-codebook for PDSCHs scheduled by UE-specific DCI formats, or two HARQ-ACK sub-codebooks with one HARQ-ACK sub-codebook for PDSCHs scheduled by UE-specific DCI formats and another HARQ-ACK sub-codebook for PDSCHs scheduled by group-common DCI formats. One bit in a UE-specific DCI format may be used for the sub-codebook indication.

For example, the sub-codebook indication of a UE-specific DCI format being "0" may indicate that only one PDSCH group is acknowledged in the HARQ-ACK codebook (for example, only the HARQ-ACK feedback corresponding to the PDSCH scheduled by the UE-specific DCI format will be transmitted in the HARQ-ACK codebook); the sub-codebook indication being "1" may indicate that two groups are acknowledged in the HARQ-ACK codebook (for example, both the HARQ-ACK feedback corresponding to the PDSCHs scheduled by the UE-specific DCI group and the HARQ-ACK feedback corresponding to the PDSCH scheduled by the group-common DCI group will be transmitted in the HARQ-ACK codebook); and vice versa.

In some other embodiments of the present disclosure, the sub-codebook indication in a UE-specific DCI format of the UE-specific DCI group may indicate whether the HARQ-ACK feedback for the PDSCH scheduled by the group-common DCI format is to be transmitted with the HARQ-ACK feedback corresponding to the PDSCH scheduled by the UE-specific DCI format in the same HARQ-ACK codebook. The sub-codebook indication in a UE-specific DCI format may include 1 bit.

For example, the sub-codebook indication being "0" may indicate that the HARQ-ACK feedback for the PDSCH scheduled by the group-common DCI format is not to be transmitted with the HARQ-ACK feedback corresponding to the PDSCH scheduled by the UE-specific DCI format in the same HARQ-ACK codebook (for example, only the HARQ-ACK feedback corresponding to the PDSCH scheduled by the UE-specific DCI format will be transmitted in the HARQ-ACK codebook); the sub-codebook indication being "1" may indicate that the HARQ-ACK feedback for the PDSCHs scheduled by the group-common DCI format group is to be transmitted with the HARQ-ACK feedback corresponding to the PDSCHs scheduled by the UE-specific DCI format group in the same HARQ-ACK codebook (for example, both the HARQ-ACK feedback corresponding to the PDSCHs scheduled by the UE-specific DCI format group and the HARQ-ACK feedback corresponding to the PDSCHs scheduled by the group-common DCI format group will be transmitted in the HARQ-ACK codebook); or vice versa.

In some embodiments of the present disclosure, the sub-codebook indication may be updated from one UE-specific DCI format to a next UE-specific DCI format. A UE may determine the HARQ-ACK codebook based on the last received UE-specific DCI format among the UE-specific DCI group. In some embodiments of the present disclosure, the sub-codebook indication may be maintained as the same among the UE-specific DCI formats in the UE-specific DCI group (i.e., UE-specific DCI formats corresponding to the same PUCCH transmission).

For example, referring back to FIG. 2, the UE-specific DCI formats scheduling PDSCHs 221 and 222 may indicate that only the HARQ-ACK feedback corresponding to the PDSCHs scheduled by the UE-specific DCI formats will be transmitted in the HARQ-ACK codebook. The UE-specific DCI formats scheduling PDSCHs 223 and 224 may indicate that both the HARQ-ACK feedback corresponding to the PDSCHs (e.g., PDSCHs 221-224) scheduled by the UE-specific DCI formats and the HARQ-ACK feedback corresponding to the PDSCHs (e.g., PDSCHs 225 and 226) scheduled by the group-common DCI formats will be transmitted in the HARQ-ACK codebook. The UE may determine that the HARQ-ACK codebook including two sub-codebooks based on the UE-specific DCI format scheduling PDSCH 224.

In some embodiments of the present disclosure, a UE-specific DCI format may indicate (hereinafter, "group-common DAI indication") the DAI of the last received group-common DCI format (e.g., the group-common DCI format scheduling PDSCH 226) in the UE-specific DCI group. With this information, a UE can determine the sub-codebook size of the HARQ-ACK feedback for PDSCHs scheduled by the group-common DCI group. The DAI may be a counter DAI in the case of a single carrier for multicast transmission or a total DAI in the case of multiple carriers for multicast transmission.

In some embodiments of the present disclosure, a UE-specific DCI format may include at least one of the sub-codebook indication and group-common DAI indication. In the case that both indications are included, when the sub-codebook indication indicates that only the HARQ-ACK feedback corresponding to the PDSCH scheduled by the UE-specific DCI format will be transmitted in the HARQ-ACK codebook, a UE may neglect the group-common DAI indication in the UE-specific DCI format. Otherwise, when the sub-codebook indication indicates both the HARQ-ACK feedback corresponding to the PDSCHs scheduled by the UE-specific DCI group and the HARQ-ACK feedback corresponding to the PDSCHs scheduled by the group-common DCI group will be transmitted in the HARQ-ACK codebook, the UE may determine the sub-codebook size of the HARQ-ACK information bits for PDSCHs scheduled by the group-common DCI group based on the group-common DAI indication in the UE-specific DCI format.

For example, referring to FIG. 3, a BS may schedule six PDSCHs (e.g., PDSCHs 321-326) with corresponding HARQ-ACK feedback to be transmitted in the same HARQ-ACK codebook. The six PDSCHs may be divided into two groups, for example, a first PDSCH group including PDSCH 325 and PDSCH 326 scheduled by the group-common DCI formats, and a second PDSCH group including PDSCHs 321-324 scheduled by the UE-specific DCI formats.

The HARQ-ACK codebook may include two HARQ-ACK sub-codebooks, for example, a first sub-codebook including HARQ-ACK information bits for the first PDSCH group, and a second sub-codebook including HARQ-ACK information bits for the second PDSCH group. At least one of the UE-specific DCI formats scheduling PDSCHs 321-324 may indicate that both the first sub-codebook and the second sub-codebook will be transmitted in the same HARQ-ACK codebook.

In the example of FIG. 3, the DAI of the last received group-common DCI format is 2. At least one of the UE-specific DCI formats scheduling PDSCHs 321-324 may indicate a DAI of 2, based on which the UE may determine the size of first sub-codebook. Assuming that the first sub-codebook is placed firstly and then followed by the second sub-codebook, when, for example, the last group-common DCI format has been missed, the UE can still correctly determine the sub-codebook size of the first sub-codebook. Accordingly, there would be no misunderstanding of the HARQ-ACK codebook size between the BS and the UE.

In some embodiments of the present disclosure, the final HARQ-ACK codebook may include two HARQ-ACK sub-codebooks. One sub-codebook (hereinafter, "sub-codebook #1A") may include HARQ-ACK information bits (i.e., HARQ-ACK feedback) for PDSCHs scheduled by the group-common DCI formats, and another sub-codebook (hereinafter, "sub-codebook #2A") may include HARQ-ACK information bits for PDSCHs scheduled by the UE-specific DCI formats.

In some embodiments of the present disclosure, the size of one of sub-codebook #1A and sub-codebook #2A which is placed in the front of the HARQ-ACK codebook may be configured by RRC signaling, or dynamically indicated by, for example, at least one of the group-common DCI formats and the UE-specific DCI formats. The size of a sub-codebook may be, for example, 1, 2, 3, 4, 5, 6, 7, 8, 9, 10, and so on. In some examples, the RRC signaling or the DCI format may indicate the sub-codebook size from a set of candidate sizes, for example, {1, 2, 3, 4, 5, 6, 7, 8, 9, 10}. The set of candidate sizes may be configured by RRC signaling or predefined, for example, in a standard(s).

In some embodiments of the present disclosure, the sub-codebook size indicated by the DCI format may be updated from one DCI format to a next DCI format. A UE may determine the size of the sub-codebook placed in the front of the HARQ-ACK codebook based on the last received DCI format. In some embodiments of the present disclosure, the sub-codebook size may be maintained as the same among the DCI formats corresponding to the same PUCCH transmission.

In some embodiments, the sub-codebook size may be indicated only in the group-common DCI formats for scheduling PDSCHs for multicast. In some another embodiments, the sub-codebook size may be indicated only in the UE-specific DCI formats for scheduling PDSCHs for unicast. In yet other embodiments, the sub-codebook size may be indicated in both the group-common DCI formats for scheduling PDSCHs for multicast and the UE-specific DCI formats for scheduling PDSCHs for unicast.

The UE may not expect to receive PDSCHs with corresponding HARQ-ACK feedback in the sub-codebook placed in the front of the HARQ-ACK codebook greater than the RRC configured or dynamically indicated sub-codebook size.

In some examples, sub-codebook #1A may be placed in the front of the HARQ-ACK codebook, followed by sub-codebook #2A. In these examples, the size of sub-codebook #1A may be configured by RRC signaling, or indicated by at least one of the group-common DCI formats and the UE-specific DCI formats. The UE may not expect to receive PDSCHs scheduled by the group-common DCI formats with corresponding HARQ-ACK information bits greater than the configured or indicated sub-codebook size. The size of sub-codebook #2A may be determined based on the counter or total DAI in the UE-specific DCI format.

The HARQ-ACK information bits in each sub-codebook may be ordered independently according to the DAIs indicated in the corresponding DCI formats. For example, the HARQ-ACK information bits for PDSCHs scheduled by the group-common DCI formats in sub-codebook #1A may be arranged according to the DAIs indicated in the group-common DCI formats. The HARQ-ACK information bits for PDSCHs scheduled by the UE-specific DCI formats in sub-codebook #2A may be arranged according to the DAIs indicated in the UE-specific DCI formats.

In this way, when, for example, the last group-common DCI format has been missed, the bit positions of both sub-codebook #1A and sub-codebook #2A will not be impacted.

Referring to FIG. 3, assuming that each PDSCH corresponds to one HARQ-ACK information bit and the size of sub-codebook #1A may be configured or indicated by all the group-common DCI formats as 2, when no error case happens, the UE may transmit a HARQ-ACK codebook including sub-codebook #1A {b0', b1'} and sub-codebook #2A {a0', a1', a2', a3'} to the BS in a slot on PUCCH 315. In other words, the HARQ-ACK codebook is {b0', b1', a0', a1', a2', a3'} when no error case happens. In the HARQ-ACK codebook, b0' and b1' denote HARQ-ACK information bits for PDSCHs 325 and 326, and a0', a1', a2', and a3' denote HARQ-ACK information bits for PDSCHs 321-324.

When the DCI format scheduling PDSCH 326 has been missed by the UE, the UE cannot identify this error case since this DCI format is the last DCI format among the group-common DCI formats. The UE may generate sub-codebook #1A according to the RRC configured or DCI indicated sub-codebook size. For example, the UE may first generate a sub-codebook (e.g., {b0'}) according to the HARQ-ACK information bit for PDSCH 325, and then add a padding bit (e.g., NACK) to the above sub-codebook to match the RRC configured or DCI indicated sub-codebook size. That is, the UE may generate sub-codebook #1A as {b0', NACK}. The UE may transmit the HARQ-ACK codebook {b0', NACK, a0', a1', a2', a3'} to the BS.

In this way, the HARQ-ACK information bits for PDSCHs scheduled by the UE-specific DCI formats is not shifted and the same HARQ-ACK codebook size is guaranteed at both the BS and UE.

On the other hand, when the BS only transmits one (that is, the HARQ-ACK information bit(s) for the actually scheduled PDSCH(s) is less than the RRC configured or DCI indicated size) group-common DCI format for scheduling one PDSCH, the UE may still add a padding bit (e.g., NACK) to sub-codebook #1A to guarantee the size of the sub-codebook #1A equals the RRC configured or DCI indicated sub-codebook size. Whether a second group-common DCI format is transmitted or not is unknown to the UE. In any case, the UE needs to add a padding bit(s) in order to match the RRC configured or DCI indicated sub-codebook size when the size of a sub-codebook generated based on the corresponding HARQ-ACK feedback is smaller than the RRC configured or DCI indicated sub-codebook size.

In some other examples, sub-codebook #2A may be placed in the front of the HARQ-ACK codebook, followed by sub-codebook #1A. In these examples, the size of sub-codebook #2A may be configured by RRC signaling, or indicated by at least one of the group-common DCI formats and the UE-specific DCI formats. The UE may not expect to receive PDSCHs scheduled by the UE-specific DCI formats with corresponding HARQ-ACK information bits greater than the configured or indicated sub-codebook size. The size of sub-codebook #1A may be determined based on the counter or total DAI in the group-common DCI format.

The HARQ-ACK information bits in each sub-codebook may be ordered independently according to the DAIs indicated in the corresponding DCI formats. For example, the HARQ-ACK information bits for PDSCHs scheduled by the UE-specific DCI formats in sub-codebook #1A may be arranged according to the DAIs indicated in the UE-specific DCI formats. The HARQ-ACK information bits for PDSCHs scheduled by the group-common DCI formats in sub-codebook #2A may be arranged according to the DAIs indicated in the group-common DCI formats.

In this way, when, for example, the last UE-specific DCI format has been missed, the bit positions of both sub-codebook #1A and sub-codebook #2A will not be impacted.

Referring to FIG. 2, assuming that each PDSCH corresponds to one HARQ-ACK information bit and the size of sub-codebook #2A may be configured or indicated by all the UE-specific DCI formats as 4, when no error case happens, the UE may transmit a HARQ-ACK codebook including sub-codebook #2A {a0, a1, a2, a3} and sub-codebook #1A {b0, b1} to the BS in a slot on PUCCH 215. In other words, the HARQ-ACK codebook is {a0, a1, a2, a3, b0, b1} when no error case happens. In the HARQ-ACK codebook, a0, a1, a2 and a3 denote HARQ-ACK information bits for PDSCHs 221-224, and b0 and b1 denote HARQ-ACK information bits for PDSCHs 225 and 226.

When the DCI format scheduling PDSCH 224 has been missed by the UE, the UE cannot identify this error case since this DCI format is the last DCI format among the UE-specific DCI formats. The UE may generate sub-codebook #2A according to the RRC configured or DCI indicated sub-codebook size. For example, the UE may first generate a sub-codebook (e.g., {a0, a1, a2}) according to the HARQ-ACK information bit for PDSCHs 221-223, and then add a padding bit (e.g., NACK) to the above sub-codebook to match the RRC configured or DCI indicated sub-codebook size. That is, the UE may generate sub-codebook #2A as {a0, a1, a2, NACK}. The UE may transmit the HARQ-ACK codebook {a0, a1, a2, NACK, b0, b1} to the BS.

In this way, the HARQ-ACK information bits for PDSCHs scheduled by the group-common DCI formats is not shifted and the same HARQ-ACK codebook size is guaranteed at both the BS and UE.

On the other hand, when the BS transmits one UE-specific DCI format for scheduling one PDSCH (that is, the HARQ-ACK information bit(s) for the actually scheduled PDSCH(s) is less than the RRC configured or DCI indicated size), the UE may add three padding bits (e.g., three NACKs) to sub-codebook #2A to guarantee the size of the sub-codebook #2A equals the RRC configured or DCI indicated sub-codebook size. Whether the last three UE-specific DCI formats are transmitted or not is unknown to the UE. In any case, the UE needs to add a padding bit(s) in order to match the RRC configured or DCI indicated sub-codebook size when the size of a sub-codebook generated based on the corresponding HARQ-ACK feedback is smaller than the RRC configured or DCI indicated sub-codebook size.

In some embodiments of the present disclosure, the final HARQ-ACK codebook may include two HARQ-ACK sub-codebooks. One sub-codebook (hereinafter, "sub-codebook #1B") may include HARQ-ACK information bits (i.e., HARQ-ACK feedback) for PDSCHs scheduled by the group-common DCI formats, and another sub-codebook (hereinafter, "sub-codebook #2B") may include HARQ-ACK information bits for PDSCHs scheduled by the UE-specific DCI formats.

When the size of a HARQ-ACK codebook is not larger than 11, Reed-Muller (RM) coding may be employed to encode the HARQ-ACK codebook. According to RM coding, 11 basic sequences may be defined to support encoding of maximum 11 HARQ-ACK information bits. When the size of a HARQ-ACK codebook is smaller than 11, a padding bit(s) (e.g., NACK) may be appended to the HARQ-ACK codebook for RM coding.

The bit positions in a HARQ-ACK codebook may be divided into two sets of bit positions, for example, bit position set #1 and bit position set #2. One of bit position set #1 and bit position set #2 may be reserved for sub-codebook #1B, and the other bit position set #2 may be reserved for sub-codebook #2B. The HARQ-ACK information bits of each sub-codebook may be placed in the HARQ-ACK codebook according to the corresponding bit position set. For the bit position(s) in the HARQ-ACK codebook to where no HARQ-ACK information bit (e.g., ACK or NACK) is mapped, a padding bit(s) (e.g., NACK) may be mapped to reach the bitwidth limit (e.g., 11 bits) for RM coding.

In some embodiments of the present disclosure, bit position set #1 may include the first M bit positions in a HARQ-ACK codebook, and bit position set #2 may include the remaining bit positions in the HARQ-ACK codebook. In these embodiments, bit position set #1 can accommodate M HARQ-ACK information bits and bit position set #2 can accommodate (11-M) HARQ-ACK information bits.

In some examples, the value of M may be configured by RRC signaling from a set of candidate values. In some other examples, the value of M may be predefined, for example, in a standard(s), from a set of candidate values. For example, the set of candidate values may be {1, 2, 3, 4, 5, 6, 7, 8, 9, 10}.

In some embodiments, bit position set #1 may be reserved for sub-codebook #2B and bit position set #2 may be reserved for sub-codebook #1B. Therefore, there are a maximum of M HARQ-ACK information bits for sub-codebook #2B, starting from the beginning of the first bit position in the HARQ-ACK codebook, and there are a maximum of (11-M) HARQ-ACK information bits for sub-codebook #1B, starting from the (M+1)^{th} bit position in the HARQ-ACK codebook.

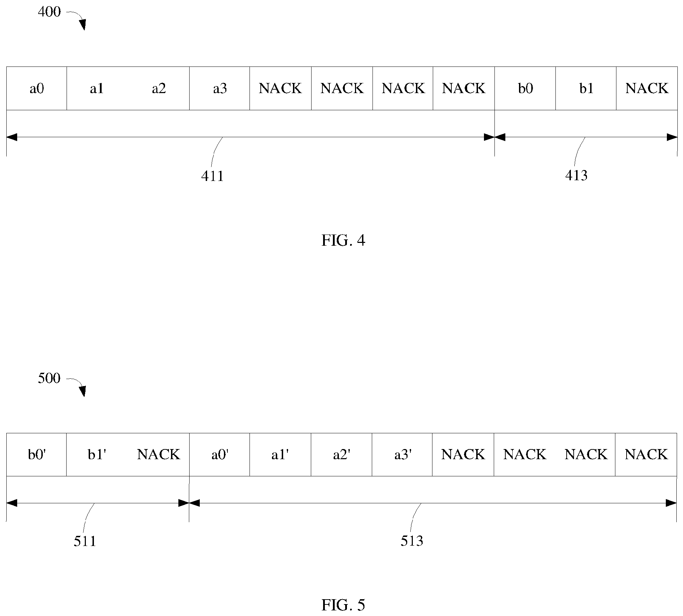

Assuming that each PDSCH corresponds to one HARQ-ACK information bit and the value of M is 8, as shown in FIG. 4, bit position set 411 may include the first 8 bit positions in HARQ-ACK codebook 400, and bit position set 413 may include the last 3 bit positions in HARQ-ACK codebook 400. Bit position set 411 may be reserved for the sub-codebook (e.g., sub-codebook #2B) including HARQ-ACK information bits for PDSCHs scheduled by UE-specific DCI formats. Bit position set 413 may be reserved for the sub-codebook (e.g., sub-codebook #1B) including HARQ-ACK information bits for PDSCHs scheduled by group-common DCI formats.

In the example of FIG. 2, when no error case happens, the sub-codebook including HARQ-ACK information bits for PDSCHs scheduled by UE-specific DCI formats (sub-codebook #2B) is {a0, a1, a2, a3}, and the sub-codebook including HARQ-ACK information bits for PDSCHs scheduled by group-common DCI formats (sub-codebook #1B) is {b0, b1}. As shown in FIG. 4, the UE may map the two sub-codebooks to HARQ-ACK codebook 400 as {a0, a1, a2, a3, NACK, NACK, NACK, NACK, b0, b1, NACK} for RM encoding.

When the DCI format scheduling PDSCH 224 has been missed by the UE, the UE may determine sub-codebook #2B and sub-codebook #1B as {a0, a1, a2} and {b0, b1}, respectively. The UE may map the two sub-codebooks to HARQ-ACK codebook 400 as {a0, a1, a2, NACK, NACK, NACK, NACK, NACK, b0, b1, NACK} for RM encoding.

In this way, the HARQ-ACK information bits in sub-codebook #1B are not shifted and a correct HARQ-ACK codebook is guaranteed between the BS and UE. Even when the DCI format for scheduling PDSCH 224 in FIG. 2 has been missed, the correct HARQ-ACK codebook can be still guaranteed between the BS and UE.

When the number of HARQ-ACK information bits for sub-codebook #2B is larger than M or the number of HARQ-ACK information bits for sub-codebook #1B is larger than (11-M), and the total number of HARQ-ACK information bits for both sub-codebooks is not larger than 11, the remaining HARQ-ACK information bits for one sub-codebook (e.g., sub-codebook #2B) can be placed in the remaining bit positions reserved for the other sub-codebook (e.g., sub-codebook #1B). For example, assuming that sub-codebook #1B is {b0, b1, b2, b3} and sub-codebook #2B is {a0, a1, a2, a3}, the HARQ-ACK codebook can be generated as {a0, a1, a2, a3, b3, NACK, NACK, NACK, b0, b1, b2}.

In some embodiments, bit position set #1 may be reserved for sub-codebook #1B and bit position set #2 may be reserved for sub-codebook #2B. Therefore, there are a maximum of M HARQ-ACK information bits for sub-codebook #1B, starting from the beginning of the first bit position in the HARQ-ACK codebook, and there are a maximum of (11-M) HARQ-ACK information bits for sub-codebook #2B, starting from the (M+1)^{th} bit position in the HARQ-ACK codebook.

Assuming that each PDSCH corresponds to one HARQ-ACK information bit and the value of M is 3, as shown in FIG. 5, bit position set 511 may include the first 3 bit positions in HARQ-ACK codebook 500, and bit position set 513 may include the last 5 bit positions in HARQ-ACK codebook 500. Bit position set 511 may be reserved for the sub-codebook (e.g., sub-codebook #1B) including HARQ-ACK information bits for PDSCHs scheduled by group-common DCI formats. Bit position set 513 may be reserved for the sub-codebook (e.g., sub-codebook #2B) including HARQ-ACK information bits for PDSCHs scheduled by UE-specific DCI formats.

In the example of FIG. 3, when no error case happens, the sub-codebook including HARQ-ACK information bits for PDSCHs scheduled by group-common DCI formats (sub-codebook #1B) is {b0', b1'}, and the sub-codebook including HARQ-ACK information bits for PDSCHs scheduled by UE-specific DCI formats (sub-codebook #2B) is {a0', a1', a2', a3'}. As shown in FIG 5, the UE may map the two sub-codebooks to HARQ-ACK codebook 500 as {b0', b1', NACK, a0', a1', a2', a3', NACK, NACK, NACK, NACK} for RM encoding.

When the DCI format scheduling PDSCH 326 has been missed by the UE, the UE may determine sub-codebook #1B and sub-codebook #2B as {b0'} and {a0', a1', a2', a3'}, respectively. The UE may map the two sub-codebooks to HARQ-ACK codebook 500 as {b0', NACK, NACK, a0', a1', a2', a3', NACK, NACK, NACK, NACK} for RM encoding.

In this way, the HARQ-ACK information bits in sub-codebook #2B are not shifted and a correct HARQ-ACK codebook is guaranteed between the BS and UE. Even when the DCI format for scheduling PDSCH 326 in FIG. 3 has been missed, the correct HARQ-ACK codebook can be still guaranteed between the BS and UE.

When the number of HARQ-ACK information bits for sub-codebook #1B is larger than M or the number of HARQ-ACK information bits for sub-codebook #2B is larger than (11-M), and the total number of HARQ-ACK information bits for both sub-codebooks is not larger than 11, the remaining HARQ-ACK information bits for one sub-codebook (e.g., sub-codebook #2B) can be placed in the remaining bit positions reserved for the other sub-codebook (e.g., sub-codebook #1B). For example, assuming that sub-codebook #1B is {b0', b1', b2', b3'} and sub-codebook #2B is {a0', a1', a2', a3'}, the HARQ-ACK codebook can be generated as {b0', b1', b2', a0', a1', a2', a3', b3', NACK, NACK, NACK}.

In some embodiments of the present disclosure, bit position set #1 may include the even-numbered bit positions in the HARQ-ACK codebook and bit position set #2 may include odd-numbered bit positions in the HARQ-ACK codebook. In these embodiments, bit position set #1 can accommodate 6 HARQ-ACK information bits (i.e., bit positions of 0, 2, 4, 6, 8, 10) and bit position set #2 can accommodate 5 HARQ-ACK information bits (i.e., bit positions of 1, 3, 5, 7, 9).

In some embodiments, bit position set #1 may be reserved for sub-codebook #2B and bit position set #2 may be reserved for sub-codebook #1B. Therefore, there are a maximum of 6 HARQ-ACK information bits for sub-codebook #2B, and there are a maximum of 5 HARQ-ACK information bits for sub-codebook #1B.

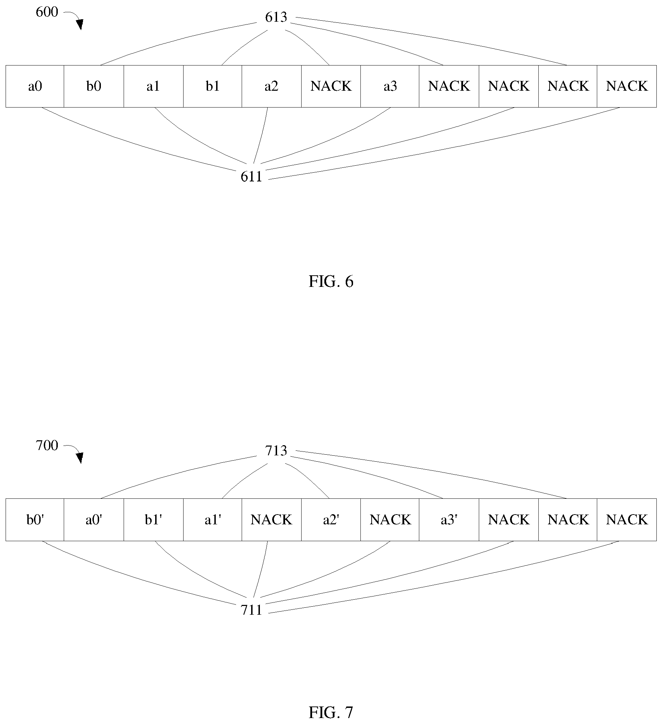

Assuming that each PDSCH corresponds to one HARQ-ACK information bit, as shown in FIG. 6, bit position set 611 may include 6 bit positions in HARQ-ACK codebook 600, and bit position set 613 may include 5 bit positions in HARQ-ACK codebook 600. Bit position set 611 may be reserved for the sub-codebook (e.g., sub-codebook #2B) including HARQ-ACK information bits for PDSCHs scheduled by UE-specific DCI formats. Bit position set 613 may be reserved for the sub-codebook (e.g., sub-codebook #1B) including HARQ-ACK information bits for PDSCHs scheduled by group-common DCI formats.

In the example of FIG. 2, when no error case happens, the sub-codebook including HARQ-ACK information bits for PDSCHs scheduled by UE-specific DCI formats (sub-codebook #2B) is {a0, a1, a2, a3}, and the sub-codebook including HARQ-ACK information bits for PDSCHs scheduled by group-common DCI formats (sub-codebook #1B) is {b0, b1}. As shown in FIG. 6, the UE may map the two sub-codebooks to HARQ-ACK codebook 600 as {a0, b0, a1, b1, a2, NACK, a3, NACK, NACK, NACK, NACK} for RM encoding.

When the DCI format scheduling PDSCH 224 has been missed by the UE, the UE may determine sub-codebook #2B and sub-codebook #1B as {a0, a1, a2} and {b0, b1}, respectively. The UE may map the two sub-codebooks to HARQ-ACK codebook 600 as {a0, b0, a1, b1, a2, NACK, NACK, NACK, NACK, NACK, NACK} for RM encoding.

In this way, the HARQ-ACK information bits in sub-codebook #1B are not shifted and a correct HARQ-ACK codebook is guaranteed between the BS and UE. Even when the DCI format for scheduling PDSCH 224 in FIG. 2 has been missed, the correct HARQ-ACK codebook can be still guaranteed between the BS and UE.

When the number of HARQ-ACK information bits for sub-codebook #2B is larger than 6 or the number of HARQ-ACK information bits for sub-codebook #1B is larger than 5, and the total number of HARQ-ACK information bits for both sub-codebooks is not larger than 11, the remaining HARQ-ACK information bits for one sub-codebook (e.g., sub-codebook #2B) can be placed in the remaining bit positions reserved for the other sub-codebook (e.g., sub-codebook #1B). For example, assuming that sub-codebook #1B is {b0, b1, b2, b3, b4, b5} and sub-codebook #2B is {a0, a1, a2, a3}, the HARQ-ACK codebook can be generated as {a0, b0, a1, b1, a2, b2, a3, b3, b5, b4, NACK}.

In some embodiments, bit position set #1 may be reserved for sub-codebook #1B and bit position set #2 may be reserved for sub-codebook #2B. Therefore, there are a maximum of 6 HARQ-ACK information bits for sub-codebook #1B, and there are a maximum of 5 HARQ-ACK information bits for sub-codebook #2B.

Assuming that each PDSCH corresponds to one HARQ-ACK information bit, as shown in FIG. 7, bit position set 711 may include 6 bit positions in HARQ-ACK codebook 700, and bit position set 713 may include 5 bit positions in HARQ-ACK codebook 700. Bit position set 711 may be reserved for the sub-codebook (e.g., sub-codebook #1B) including HARQ-ACK information bits for PDSCHs scheduled by group-common DCI formats. Bit position set 713 may be reserved for the sub-codebook (e.g., sub-codebook #2B) including HARQ-ACK information bits for PDSCHs scheduled by UE-specific DCI formats.

In the example of FIG. 3, when no error case happens, the sub-codebook including HARQ-ACK information bits for PDSCHs scheduled by group-common DCI formats (sub-codebook #1B) is {b0', b1'}, and the sub-codebook including HARQ-ACK information bits for PDSCHs scheduled by UE-specific DCI formats (sub-codebook #2B) is {a0', a1', a2', a3'}. As shown in FIG 7, the UE may map the two sub-codebooks to HARQ-ACK codebook 700 as {b0', a0', b1', a1', NACK, a2', NACK, a3', NACK, NACK, NACK} for RM encoding.

When the DCI format scheduling PDSCH 326 has been missed by the UE, the UE may determine sub-codebook #1B and sub-codebook #2B as {b0'} and {a0', a1', a2', a3'}, respectively. The UE may map the two sub-codebooks to HARQ-ACK codebook 700 as {b0', a0', NACK, a1', NACK, a2', NACK, a3', NACK, NACK, NACK} for RM encoding.

In this way, the HARQ-ACK information bits in sub-codebook #2B are not shifted and a correct HARQ-ACK codebook is guaranteed between the BS and UE. Even when the DCI format for scheduling PDSCH 326 in FIG. 3 has been missed, the correct HARQ-ACK codebook can be still guaranteed between the BS and UE.

When the number of HARQ-ACK information bits for sub-codebook #1B is larger than 6 or the number of HARQ-ACK information bits for sub-codebook #2B is larger than 5, and the total number of HARQ-ACK information bits for both sub-codebooks is not larger than 11, the remaining HARQ-ACK information bits for one sub-codebook (e.g., sub-codebook #2B) can be placed in the remaining bit positions reserved for the other sub-codebook (e.g., sub-codebook #1B). For example, assuming that sub-codebook #1B is {b0', b1'} and sub-codebook #2B is {a0', a1', a2', a3', a4', a5'}, the HARQ-ACK codebook can be generated as {b0', a0', b1', a1', a5', a2', NACK, a3', NACK, a4', NACK}.

In some embodiments of the present disclosure, the final HARQ-ACK codebook may include two HARQ-ACK sub-codebooks. One sub-codebook (hereinafter, "sub-codebook #1C") may include HARQ-ACK information bits (i.e., HARQ-ACK feedback) for PDSCHs scheduled by the group-common DCI formats, and another sub-codebook (hereinafter, "sub-codebook #2C") may include HARQ-ACK information bits for PDSCHs scheduled by the UE-specific DCI formats.

In some embodiments of the present disclosure, the HARQ-ACK codebook may include a DAI field. For example, when the size of a HARQ-ACK codebook is not larger than 9, a DAI field including 2 bits may be located at the beginning of the HARQ-ACK codebook. The two-bit DAI field being "00," "01," "10," and "11" may denote DAI values of 1, 2, 3, and 4, respectively.

The DAI field may indicate the DAI in a last received DCI format from a UE's perspective among the DCI formats scheduling PDSCHs with corresponding HARQ-ACK information bits in one of sub-codebook #1C or sub-codebook #2C which is placed in the front of the HARQ-ACK codebook.

For example, when sub-codebook #1C is placed in the front of the HARQ-ACK codebook, followed by sub-codebook #2C, the DAI field in the HARQ-ACK codebook indicates a last received DCI format among the group-common DCI formats. When sub-codebook #2C is placed in the front of the HARQ-ACK codebook, followed by sub-codebook #1C, the DAI field in the HARQ-ACK codebook indicates a last received DCI format among the UE-specific DCI formats.

When the size of a HARQ-ACK codebook (including the DAI field) is smaller than 11, a padding bit(s) (e.g., NACK) may be appended to the HARQ-ACK codebook for RM coding.

In this way, a BS can determine whether the last transmitted DCI format among the DCI formats scheduling PDSCHs with corresponding HARQ-ACK information bits in the sub-codebook placed in the front of the HARQ-ACK codebook has been missed by the UE. When the BS determines that the last transmitted DCI format has been missed, the BS may adjust the received HARQ-ACK codebook. For example, the BS may insert a padding bit(s) (e.g., NACK) in the received HARQ-ACK codebook for the PDSCH scheduled by the missed DCI format, identify the HARQ-ACK information bits of the sub-codebook in the rear of the HARQ-ACK codebook, and thus learn the two sub-codebooks.

In the example of FIG. 3, when no error case happens, the sub-codebook including HARQ-ACK information bits for PDSCHs scheduled by group-common DCI formats (sub-codebook #1C) is {b0', b1'}, the sub-codebook including HARQ-ACK information bits for PDSCHs scheduled by UE-specific DCI formats (sub-codebook #2C) is {a0', a1', a2', a3'}, and the last DAI among the group-common DCI formats is 2.

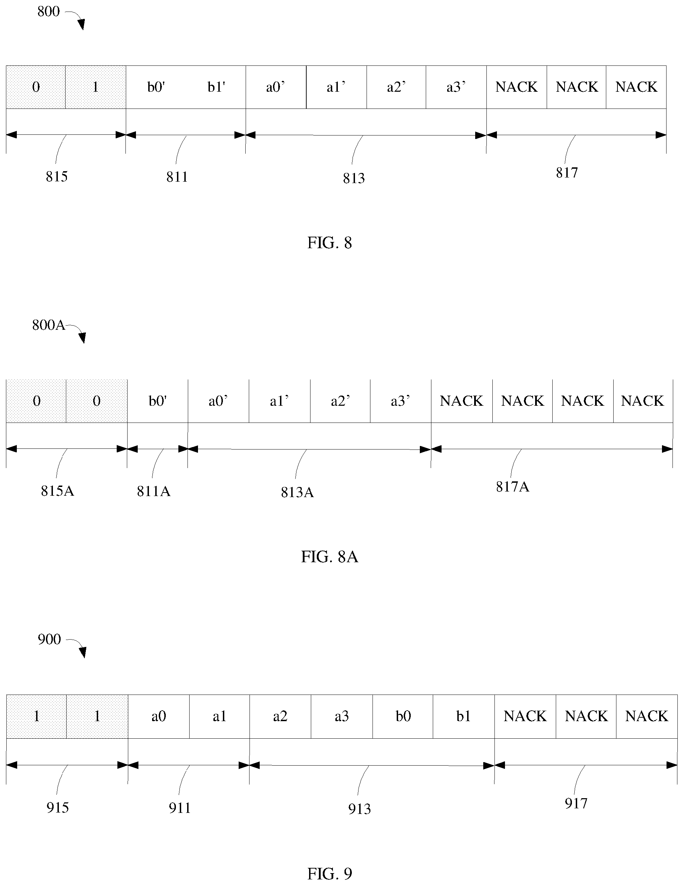

In this case, when sub-codebook #1C is placed in front of sub-codebook #2C in the HARQ-ACK codebook, the UE may generate a HARQ-ACK codebook indicating "01" (e.g., the DAI field) at the beginning of the HARQ-ACK codebook, followed by sub-codebook #1C and sub-codebook #2C. For example, referring to FIG. 8, the UE may generate HARQ-ACK codebook 800 as {0, 1, b0', b1', a0', a1', a2', a3', NACK, NACK, NACK} for RM encoding. In HARQ-ACK codebook 800, field 815 is the DAI field, and field 811 corresponds to sub-codebook #1C, field 813 corresponds to sub-codebook #2C, and field 817 includes NACK padding bits.

When the last group-common DCI format has been missed at the UE, the UE may generate a HARQ-ACK codebook indicating "00" (e.g., the DAI field) at the beginning of the HARQ-ACK codebook, followed by sub-codebook #1C and sub-codebook #2C. For example, referring to FIG. 8A, the UE may generate HARQ-ACK codebook 800A as {0, 0, b0', a0', a1', a2', a3', NACK, NACK, NACK, NACK} for RM encoding. In HARQ-ACK codebook 800A, field 815A is the DAI field, and field 811A corresponds to sub-codebook #1C, field 813A corresponds to sub-codebook #2C, and field 817A includes NACK padding bits.

At the BS side, in response to receiving the HARQ-ACK codebook, since the DAI in the last group-common DCI format transmitted by the BS is 2, when the DAI field in the HARQ-ACK codebook indicates a DAI equals 2, the BS would determine that the last transmitted group-common DCI format is not missed by the UE and the bit positions of the received HARQ-ACK codebook are correct. Otherwise, the BS may determine that the last transmitted group-common DCI format has been missed by the UE. The BS may insert a NACK bit(s) for the PDSCH scheduled by the last transmitted group-common DCI format in the received HARQ-ACK codebook. After the insertion of the NACK bit(s), the bit positions of the HARQ-ACK codebook are correct. In this way, when the last group-common DCI format has been missed, there is no misunderstanding of the HARQ-ACK codebook between the BS and UE.

In the example of FIG. 2, when no error case happens, the sub-codebook including HARQ-ACK information bits for PDSCHs scheduled by UE-specific DCI formats (sub-codebook #2C) is {a0, a1, a2, a3}, and the sub-codebook including HARQ-ACK information bits for PDSCHs scheduled by group-common DCI formats (sub-codebook #1C) is {b0, b1}, and the last DAI among the UE-specific DCI formats is 4.

In this case, when sub-codebook #2C is placed in front of sub-codebook #1C in the HARQ-ACK codebook, the UE may generate a HARQ-ACK codebook indicating "11" (e.g., the DAI field) at the beginning of the HARQ-ACK codebook, followed by sub-codebook #2C and sub-codebook #1C. For example, referring to FIG. 9, the UE may generate HARQ-ACK codebook 900 as {1, 1, a0, a1, a2, a3, b0, b1, NACK, NACK, NACK} for RM encoding. In HARQ-ACK codebook 900, field 915 is the DAI field, and field 911 corresponds to sub-codebook #2C, field 913 corresponds to sub-codebook #1C, and field 917 includes NACK padding bits.

When the last UE-specific DCI format has been missed at the UE, the UE may generate a HARQ-ACK codebook indicating "10" (e.g., the DAI field) at the beginning of the HARQ-ACK codebook, followed by sub-codebook #2C and sub-codebook #1C. For example, the UE may generate the HARQ-ACK codebook as {1, 0, a0, a1, a2, b0, b1, NACK, NACK, NACK, NACK} for RM encoding.

At the BS side, in response to receiving the HARQ-ACK codebook, since the DAI in the last UE-specific DCI format transmitted by the BS is 4, when the DAI field in the HARQ-ACK codebook indicates a DAI equals 4, the BS would determine that the last transmitted UE-specific DCI format is not missed by the UE and the bit positions of the received HARQ-ACK codebook are correct. Otherwise, the BS may determine that the last transmitted UE-specific DCI format has been missed by the UE. The BS may insert a NACK bit(s) for the PDSCH scheduled by the last transmitted UE-specific DCI format in the received HARQ-ACK codebook. After the insertion of the NACK bit(s), the bit positions of the HARQ-ACK codebook are correct. In this way, when the last UE-specific DCI format has been missed, there is no misunderstanding of the HARQ-ACK codebook between the BS and UE.

In some embodiments of the present disclosure, the final HARQ-ACK codebook generated by a UE may include HARQ-ACK feedback for a DCI format (e.g., a group-common DCI format) indicating a release of a SPS PDSCH for a multicast transmission. Such DCI format is hereinafter referred to as "SPS PDSCH release group-common DCI format." The HARQ-ACK feedback for the SPS PDSCH release group-common DCI format may be placed at various positions in the HARQ-ACK codebook.

In some examples, the HARQ-ACK feedback for the SPS PDSCH release group-common DCI format may be located at the beginning of the HARQ-ACK codebook or at the end of the HARQ-ACK codebook. In some examples, the HARQ-ACK feedback for the SPS PDSCH release group-common DCI format may be located immediately before or immediately after the HARQ-ACK sub-codebook including HARQ-ACK information bits for PDSCHs scheduled by the group-common DCI formats.

In some examples, the HARQ-ACK feedback for the SPS PDSCH release group-common DCI format may be located within the HARQ-ACK sub-codebook including HARQ-ACK information bits for PDSCHs scheduled by the group-common DCI formats. The HARQ-ACK information bits for PDSCHs scheduled by the group-common DCI formats in this HARQ-ACK sub-codebook may be arranged according to DAIs indicated in the group-common DCI formats (including the SPS PDSCH release group-common DCI format).

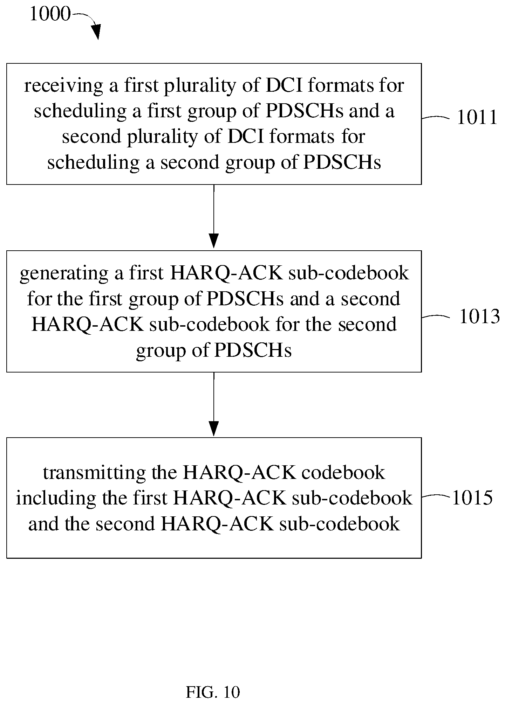

FIG. 10 illustrates a flow chart of an exemplary procedure 1000 for wireless communications in accordance with the invention. Details described in all of the foregoing embodiments of the present disclosure are applicable for the embodiments shown in FIG. 10. In some examples, the procedure may be performed by a UE, for example, UE 101 in FIG. 1.

Referring to FIG. 10, in operation 1011, a UE receives a first plurality of DCIs having a first format for scheduling a first group of PDSCHs and a second plurality of DCIs, having a second format for scheduling a second group of PDSCHs.

The CRC of each of the first plurality of DCI formats is scrambled by a first RNTI and the CRC of each of the second plurality of DCI formats is scrambled by a second RNTI different from the first RNTI. One of the first RNTI and the second RNTI are configured for a group of UEs including the UE, and the other are configured specifically for the UE. HARQ-ACK feedback for the first group of PDSCHs and HARQ-ACK feedback for the second group of PDSCHs are to be transmitted in the same HARQ-ACK codebook.

In operation 1013, the UE generates a first HARQ-ACK sub-codebook for the first group of PDSCHs and a second HARQ-ACK sub-codebook for the second group of PDSCHs. In some examples, the first HARQ-ACK sub-codebook may be placed in the front of a HARQ-ACK codebook, then followed by the second HARQ-ACK sub-codebook. In some other examples, the second HARQ-ACK sub-codebook may be placed in the front of a HARQ-ACK codebook, then followed by the first HARQ-ACK sub-codebook.

In some embodiments of the present disclosure, the first RNTI is configured for a group of UEs including the UE and the second RNTI is configured specifically for the UE. In some embodiments, at least one of the second plurality of DCI formats may include a first indicator indicating: a number of PDSCH groups with corresponding HARQ-ACK feedback to be multiplexed in the HARQ-ACK codebook; a number of HARQ-ACK sub-codebooks in the HARQ-ACK codebook; or whether the first HARQ-ACK sub-codebook is to be transmitted with the second HARQ-ACK sub-codebook in the same HARQ-ACK codebook or not. For example, the first indicator may be the sub-codebook indication as described above.

In some embodiments, at least one of the second plurality of DCI formats may include a second indicator indicating: a DAI indicated in a last received DCI format among the first plurality of DCI formats. The DAI indicated in the last received DCI format is a counter DAI in the case of a single carrier for multicast transmission, or a total DAI in the case of multiple carriers for multicast transmission. For example, the second indicator may be the group-common DAI indication as described above.

In some embodiments of the present disclosure, when the first HARQ-ACK sub-codebook is placed in the front of the HARQ-ACK codebook, then followed by the second HARQ-ACK sub-codebook, the size of the first HARQ-ACK sub-codebook may be configured by RRC signaling, or indicated by at least one of the first plurality of DCI formats and the second plurality of DCI formats. When the second HARQ-ACK sub-codebook is placed in the front of the HARQ-ACK codebook, then followed by the first HARQ-ACK sub-codebook, the size of the second HARQ-ACK sub-codebook is configured by RRC signaling, or indicated by at least one of the first plurality of DCI formats and the second plurality of DCI formats.

In some embodiments of the present disclosure, the first HARQ-ACK sub-codebook may be arranged at a first set of bit positions in the HARQ-ACK codebook, and the second HARQ-ACK sub-codebook may be arranged at a second set of bit positions in the HARQ-ACK codebook.

In some embodiments, the first set of bit positions may include a first number of consecutive bit positions in the HARQ-ACK codebook and the second set of bit positions may include the remaining bit positions in the HARQ-ACK codebook. In some examples, the UE may receive RRC signaling for configuring the first number from a set of candidate values. In some examples, the first number may be predefined from the set of candidate values.

In some embodiments, the first set of bit positions may include even-numbered bit positions in the HARQ-ACK codebook and the second set of bit positions may include odd-numbered bit positions in the HARQ-ACK codebook.

In some embodiments of the present disclosure, when the first HARQ-ACK sub-codebook is placed in the front of the HARQ-ACK codebook, then followed by the second HARQ-ACK sub-codebook, the HARQ-ACK codebook may further include a DAI that is the same as the DAI in a last received DCI format among the first plurality of DCI formats. When the second HARQ-ACK sub-codebook is placed in the front of the HARQ-ACK codebook, then followed by the first HARQ-ACK sub-codebook, the HARQ-ACK codebook may further include a downlink assignment indicator (DAI) that is the same as the DAI in a last received DCI format among the second plurality of DCI formats.

In operation 1015, the UE may transmit the HARQ-ACK codebook including the first HARQ-ACK sub-codebook and the second HARQ-ACK sub-codebook to a BS.

In some embodiments of the present disclosure, the HARQ-ACK codebook may further include HARQ-ACK feedback for a DCI format indicating a release of a semi-persistent scheduling (SPS) PDSCH for a multicast transmission.

The HARQ-ACK feedback for the DCI format indicating the release of the SPS PDSCH for a multicast transmission may be located: at the beginning of the HARQ-ACK codebook; at the end of the HARQ-ACK codebook; immediately before, immediately after or within the first HARQ-ACK sub-codebook in response to the first RNTI being configured for a group of UEs including the UE; or immediately before, immediately after or within the second HARQ-ACK sub-codebook in response to the second RNTI being configured for the group of UEs including the UE.

In some embodiments of the present disclosure, the HARQ-ACK feedback for the first group of PDSCHs in the first HARQ-ACK sub-codebook may be arranged according to the DAIs indicated in the first plurality of DCI formats. The HARQ-ACK feedback for the second group of PDSCHs in the second HARQ-ACK sub-codebook may be arranged according to DAIs indicated in the second plurality of DCI formats.

It should be appreciated by persons skilled in the art that the sequence of the operations in exemplary procedure 1000 may be changed and some of the operations in exemplary procedure 1000 may be eliminated or modified, without departing from the scope of the disclosure.

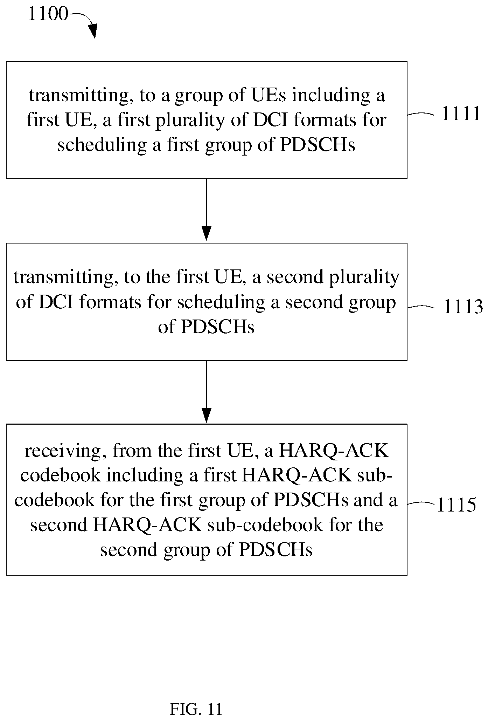

FIG. 11 illustrates a flow chart of an exemplary procedure 1100 for wireless communications in accordance with the invention. Details described in all of the foregoing embodiments of the present disclosure are applicable for the embodiments shown in FIG. 11. In some examples, the procedure is performed by a BS, for example, BS 102 in FIG. 1.

Referring to FIG. 11, in operation 1111, a BS transmits, to a group of UEs including a first UE, a first plurality of DCIs having a first format for scheduling a first group of PDSCHs. The CRC of each of the first plurality of DCIs having the first format is scrambled by a first RNTI.

In operation 1113, the BS transmits, to the first UE, a second plurality of DCIs having a second format for scheduling a second group of PDSCHs. The CRC of each of the second plurality of DCIs having the second format is scrambled by a second RNTI different from the first RNTI.

**In** operation 1115, the BS receives, from the first UE, a HARQ-ACK codebook including a first HARQ-ACK sub-codebook for the first group of PDSCHs and a second HARQ-ACK sub-codebook for the second group of PDSCHs.

According to the invention, the first RNTI is configured for the group of UEs including the first UE and the second RNTI is specifically configured for the first UE. In some embodiments, at least one of the second plurality of DCI formats may include a first indicator indicating: a number of PDSCH groups with corresponding HARQ-ACK feedback to be multiplexed in the HARQ-ACK codebook; a number of HARQ-ACK sub-codebooks in the HARQ-ACK codebook; or whether the first HARQ-ACK sub-codebook is to be multiplexed with the second HARQ-ACK sub-codebook in the same HARQ-ACK codebook or not. For example, the first indicator may be the sub-codebook indication as described above.

In some embodiments, at least one of the second plurality of DCI formats may include a second indicator indicating: a DAI indicated in a last transmitted DCI format among the first plurality of DCI formats. The DAI indicated in the last transmitted DCI format is a counter DAI in the case of a single carrier for multicast transmission, or a total DAI in the case of multiple carriers for multicast transmission. For example, the second indicator may be the group-common DAI indication as described above.

In some embodiments of the present disclosure, when the first HARQ-ACK sub-codebook is placed in the front of the HARQ-ACK codebook followed by the second HARQ-ACK sub-codebook, the BS may transmit RRC signaling for configuring a size of the first HARQ-ACK sub-codebook; or the BS may indicate the size of the first HARQ-ACK sub-codebook in at least one of the first plurality of DCI formats and the second plurality of DCI formats. When the second HARQ-ACK sub-codebook is placed in the front of the HARQ-ACK codebook followed by the first HARQ-ACK sub-codebook, the BS may transmit RRC signaling for configuring a size of the second HARQ-ACK sub-codebook; or the BS may indicate the size of the second HARQ-ACK sub-codebook in at least one of the first plurality of DCI formats and the second plurality of DCI formats.

In some embodiments of the present disclosure, the first HARQ-ACK sub-codebook may be arranged at a first set of bit positions in the HARQ-ACK codebook, and the second HARQ-ACK sub-codebook may be arranged at a second set of bit positions in the HARQ-ACK codebook.

In some embodiments, one of the first set of bit positions and the second set of bit positions may include a first number of consecutive bit positions in the HARQ-ACK codebook and the other may include the remaining bit positions in the HARQ-ACK codebook. In some examples, the BS may transmit RRC signaling for configuring the first number from a set of candidate values. In some examples, the first number may be predefined from the set of candidate values.

In some embodiments, one of the first set of bit positions and the second set of bit positions includes even-numbered bit positions in the HARQ-ACK codebook and the other includes odd-numbered bit positions in the HARQ-ACK codebook.

In some embodiments of the present disclosure, the first HARQ-ACK sub-codebook may be placed in the front of the HARQ-ACK codebook, then followed by the second HARQ-ACK sub-codebook. The HARQ-ACK codebook may further include a DAI that is the same as the DAI in a last DCI format received by the first UE among the first plurality of DCI formats. In some embodiments of the present disclosure, the second HARQ-ACK sub-codebook may be placed in the front of the HARQ-ACK codebook, then followed by the first HARQ-ACK sub-codebook. The HARQ-ACK codebook may further include a DAI that is the same as the DAI in a last DCI format received by the first UE among the second plurality of DCI formats.

In some embodiments of the present disclosure, the HARQ-ACK codebook may further include HARQ-ACK feedback for a DCI format indicating a release of a SPS PDSCH for a multicast transmission.

The method wherein the HARQ-ACK feedback for the DCI format indicating the release of the SPS PDSCH for a multicast transmission may be located: at the beginning of the HARQ-ACK codebook; at the end of the HARQ-ACK codebook; or immediately before, immediately after or within the first HARQ-ACK sub-codebook.

In some embodiments of the present disclosure, the HARQ-ACK feedback for the first group of PDSCHs in the first HARQ-ACK sub-codebook may be arranged according to DAIs indicated in the first plurality of DCI formats. The HARQ-ACK feedback for the second group of PDSCHs in the second HARQ-ACK sub-codebook may be arranged according to DAIs indicated in the second plurality of DCI formats.

It should be appreciated by persons skilled in the art that the sequence of the operations in exemplary procedure 1100 may be changed and some of the operations in exemplary procedure 1100 may be eliminated or modified, without departing from the scope of the disclosure.

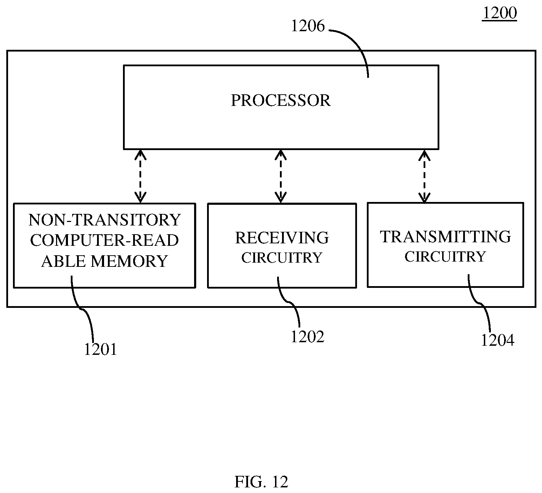

FIG. 12 illustrates a block diagram of an exemplary apparatus 1200 according to some embodiments of the present disclosure.

As shown in FIG. 12, the apparatus 1200 may include at least one non-transitory computer-readable medium 1201, at least one receiving circuitry 1202, at least one transmitting circuitry 1204, and at least one processor 1206 coupled to the non-transitory computer-readable medium 1201, the receiving circuitry 1202 and the transmitting circuitry 1204. The apparatus 1200 may be a base station side apparatus (e.g., a BS) or a communication device (e.g., a UE).

Although in this figure, elements such as the at least one processor 1206, transmitting circuitry 1204, and receiving circuitry 1202 are described in the singular, the plural is contemplated unless a limitation to the singular is explicitly stated. In some embodiments of the present application, the receiving circuitry 1202 and the transmitting circuitry 1204 are combined into a single device, such as a transceiver. In certain embodiments of the present application, the apparatus 1200 may further include an input device, a memory, and/or other components.

In some embodiments of the present disclosure, the non-transitory computer-readable medium 1201 may have stored thereon computer-executable instructions to cause a processor to implement the method with respect to the UEs as described above. For example, the computer-executable instructions, when executed, cause the processor 1206 interacting with receiving circuitry 1202 and transmitting circuitry 1204, so as to perform the operations with respect to the UEs described in FIGS. 1-10.

In some embodiments of the present disclosure, the non-transitory computer-readable medium 1201 may have stored thereon computer-executable instructions to cause a processor to implement the method with respect to the BSs as described above. For example, the computer-executable instructions, when executed, cause the processor 1206 interacting with receiving circuitry 1202 and transmitting circuitry 1204, so as to perform the operations with respect to the BSs described in FIGS. 1-9 and 11.

Those having ordinary skill in the art would understand that the operations or steps of a method described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. Additionally, in some aspects, the operations or steps of a method may reside as one or any combination or set of codes and/or instructions on a non-transitory computer-readable medium, which may be incorporated into a computer program product.

While this disclosure has been described with specific embodiments thereof, it is evident that many alternatives, modifications, and variations may be apparent to those skilled in the art. For example, various components of the embodiments may be interchanged, added, or substituted in other embodiments. Also, all of the elements of each figure are not necessary for the operation of the disclosed embodiments. For example, one of ordinary skill in the art of the disclosed embodiments would be enabled to make and use the teachings of the disclosure by simply employing the elements of the independent claims. Accordingly, embodiments of the disclosure as set forth herein are intended to be illustrative, not limiting. Various changes may be made without departing from the scope of the disclosure.

In this document, the terms "includes," "including," or any other variation thereof, are intended to cover a non-exclusive inclusion, such that a process, method, article, or apparatus that includes a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that includes the element. Also, the term "another" is defined as at least a second or more. The term "having" and the like, as used herein, are defined as "including." Expressions such as "A and/or B" or "at least one of A and B" may include any and all combinations of words enumerated along with the expression. For instance, the expression "A and/or B" or "at least one of A and B" may include A, B, or both A and B. The wording "the first," "the second" or the like is only used to clearly illustrate the embodiments of the present application, but is not used to limit the substance of the present application.

## Claims

1. A user equipment, UE, (101, 1200) for wireless communication, the UE (101, 1200) comprising:
at least one memory (1201); and
at least one processor (1206) coupled with the at least one memory (1201) and configured to cause the UE (101, 1200) to:
receive a first plurality of downlink control information, DCIs, having a first DCI format for scheduling a first group of physical downlink shared channels, PDSCHs, and a second plurality of DCIs having a second DCI format for scheduling a second group of PDSCHs,
wherein a cyclic redundancy check, CRC, of each of the first plurality of DCIs is scrambled by a first radio network temporary identifier, RNTI, which is configured for a group of UEs including the UE (101, 1200), and wherein a CRC of each of the second plurality of DCIs is scrambled by a second RNTI which is configured specifically for the UE (101, 1200), and
wherein hybrid automatic repeat request acknowledgement, HARQ-ACK, feedback for the first group of PDSCHs and HARQ-ACK feedback for the second group of PDSCHs are to be transmitted in a same HARQ-ACK codebook;
generate a first HARQ-ACK sub-codebook for the first group of PDSCHs and a second HARQ-ACK sub-codebook for the second group of PDSCHs; and
transmit the HARQ-ACK codebook including the first HARQ-ACK sub-codebook and the second HARQ-ACK sub-codebook.

2. The UE (101, 1200) of claim 1, wherein at least one of the second plurality of DCIs includes a first indicator indicating:
a number of PDSCH groups with corresponding HARQ-ACK feedback to be multiplexed in the HARQ-ACK codebook;
a number of HARQ-ACK sub-codebooks in the HARQ-ACK codebook; or
whether the first HARQ-ACK sub-codebook is to be transmitted with the second HARQ-ACK sub-codebook in the same HARQ-ACK codebook or not.

3. The UE (101, 1200) of claim 1, wherein at least one of the second plurality of DCIs includes a second indicator indicating:
a downlink assignment indicator, DAI, indicated in a last received DCI among the first plurality of DCIs.

4. The UE (101, 1200) of claim 3, wherein the DAI indicated in the last received DCI is a counter DAI in the case of a single carrier for multicast transmission, or a total DAI in the case of multiple carriers for multicast transmission.

5. The UE (101, 1200) of claim 1, wherein the at least one processor (1206) is configured such that:
the first HARQ-ACK sub-codebook is placed in the front of the HARQ-ACK codebook, followed by the second HARQ-ACK sub-codebook; and
a size of the first HARQ-ACK sub-codebook is configured by radio resource control, RRC, signaling, or indicated by at least one of the first plurality of DCIs and the second plurality of DCIs.

6. The UE (101, 1200) of claim 1, wherein the at least one processor (1206) is configured such that the first HARQ-ACK sub-codebook is arranged at a first set of bit positions in the HARQ-ACK codebook, and the second HARQ-ACK sub-codebook is arranged at a second set of bit positions in the HARQ-ACK codebook.

7. The UE (101, 1200) of claim 6, wherein the at least one processor (1206) is configured such that the first set of bit positions includes a first number of consecutive bit positions in the HARQ-ACK codebook and the second set of bit positions includes the remaining bit positions in the HARQ-ACK codebook.

8. The UE (101, 1200) of claim 7, further configured to receive radio resource control, RRC, signaling for configuring the first number from a set of candidate values; or wherein the first number is predefined from the set of candidate values.

9. The UE (101, 1200) of claim 6, wherein:
the first set of bit positions includes even-numbered bit positions in the HARQ-ACK codebook and the second set of bit positions includes odd-numbered bit positions in the HARQ-ACK codebook.

10. The UE (101, 1200) of claim 1, wherein the at least one processor (1206) is configured such that:
the first HARQ-ACK sub-codebook is placed in the front of the HARQ-ACK codebook, followed by the second HARQ-ACK sub-codebook; and
the HARQ-ACK codebook further includes a downlink assignment indicator, DAI, the same as the DAI in a last received DCI among the first plurality of DCIs.

11. The UE (101, 1200) of claim 1, wherein the at least one processor (1206) is configured such that the HARQ-ACK codebook includes HARQ-ACK feedback for a DCI indicating a release of a semi-persistent scheduling, SPS, PDSCH for a multicast transmission.

12. A base station, BS, (102, 1200) for wireless communication, the BS (102, 1200) comprising:
at least one memory (1201); and
at least one processor (1206) coupled with the at least one memory (1201) and configured to cause the BS to:
transmit, to a group of user equipment, UE, including a first UE, a first plurality of downlink control information, DCIs, having a first DCI format for scheduling a first group of physical downlink shared channels, PDSCHs;
transmit, to the first UE, a second plurality of DCIs having a second DCI format for scheduling a second group of PDSCHs,
wherein a cyclic redundancy check, CRC, of each of the first plurality of DCIs is scrambled by a first radio network temporary identifier, RNTI, which is configured for a group of UEs including the UE, and wherein a CRC of each of the second plurality of DCIs is scrambled by a second RNTI which is configured specifically for the UE; and
receive, from the first UE, a HARQ-ACK codebook including a first HARQ-ACK sub-codebook for the first group of PDSCHs and a second HARQ-ACK sub-codebook for the second group of PDSCHs.

13. A method for wireless communication performed by a user equipment, UE, the method comprising:
receiving a first plurality of downlink control information, DCIs, having a first DCI format for scheduling a first group of physical downlink shared channels, PDSCHs, and a second plurality of DCIs having a second DCI format for scheduling a second group of PDSCHs,
wherein a cyclic redundancy check, CRC, of each of the first plurality of DCIs is scrambled by a first radio network temporary identifier, RNTI, which is configured for a group of UEs including the UE, and wherein a CRC of each of the second plurality of DCIs is scrambled by a second RNTI which is configured specifically for the UE, and
wherein hybrid automatic repeat request acknowledgement, HARQ-ACK, feedback for the first group of PDSCHs and HARQ-ACK feedback for the second group of PDSCHs are to be transmitted in a same HARQ-ACK codebook;
generating a first HARQ-ACK sub-codebook for the first group of PDSCHs and a second HARQ-ACK sub-codebook for the second group of PDSCHs; and
transmitting the HARQ-ACK codebook including the first HARQ-ACK sub-codebook and the second HARQ-ACK sub-codebook.

14. The method of claim 13, wherein the HARQ-ACK codebook includes HARQ-ACK feedback for a DCI indicating a release of a semi-persistent scheduling, SPS, PDSCH for a multicast transmission.

15. A processor (1206) for a user equipment, UE, (101) for wireless communication, the processor (1206) being configured to cause the UE (101) to:
receive a first plurality of downlink control information, DCIs, having a first DCI format for scheduling a first group of physical downlink shared channels, PDSCHs, and a second plurality of DCIs having a second DCI format for scheduling a second group of PDSCHs,
wherein a cyclic redundancy check, CRC, of each of the first plurality of DCIs is scrambled by a first radio network temporary identifier, RNTI, which is configured for a group of UEs including the UE (101, 1200), and wherein a CRC of each of the second plurality of DCIs is scrambled by a second RNTI which is configured specifically for the UE (101, 1200), and
wherein hybrid automatic repeat request acknowledgement, HARQ-ACK, feedback for the first group of PDSCHs and HARQ-ACK feedback for the second group of PDSCHs are to be transmitted in a same HARQ-ACK codebook;
generate a first HARQ-ACK sub-codebook for the first group of PDSCHs and a second HARQ-ACK sub-codebook for the second group of PDSCHs; and
transmit the HARQ-ACK codebook including the first HARQ-ACK sub-codebook and the second HARQ-ACK sub-codebook.

## Patentansprüche

1. Benutzereinrichtung, UE, (101, 1200) für eine drahtlose Kommunikation, die UE (101, 1200) umfassend:
mindestens einen Speicher (1201); und
mindestens einen Prozessor (1206), der mit dem mindestens einen Speicher (1201) gekoppelt und konfiguriert ist, um die UE (101, 1200) zu veranlassen zum:
Empfangen einer ersten Vielzahl von Downlink-Steuerinformationen, DCIs, die ein erstes DCI-Format zum Planen einer ersten Gruppe gemeinsam genutzter physischer Downlink-Kanäle, PDSCHs, aufweisen, und einer zweiten Vielzahl von DCIs, die ein zweites DCI-Format zum Planen einer zweiten Gruppe von PDSCHs aufweisen,
wobei eine zyklische Redundanzprüfung, CRC, jeder der ersten Vielzahl von DCIs durch eine erste temporäre Funknetzkennung, RNTI, verschlüsselt wird, die für eine Gruppe von UEs einschließlich der UE (101, 1200) konfiguriert ist, und wobei eine CRC jeder der zweiten Vielzahl von DCIs durch eine zweite RNTI verschlüsselt wird, die speziell für die UE (101, 1200) konfiguriert ist, und
wobei eine hybride automatische Wiederholungsanforderungsbestätigungsrückmeldung, HARQ-ACK-Rückmeldung, für die erste Gruppe von PDSCHs und eine HARQ-ACK-Rückmeldung für die zweite Gruppe von PDSCHs in einem gleichen HARQ-ACK-Codebuch übertragen werden sollen;
Erzeugen eines ersten HARQ-ACK-Untercodebuchs für die erste Gruppe von PDSCHs und eines zweiten HARQ-ACK-Untercodebuchs für die zweite Gruppe von PDSCHs; und
Übertragen des HARQ-ACK-Codebuchs einschließlich des ersten HARQ-ACK-Untercodebuchs und des zweiten HARQ-ACK-Untercodebuchs.

2. UE (101, 1200) nach Anspruch 1, wobei mindestens eine der zweiten Vielzahl von DCIs eine erste Anzeige einschließt, die anzeigt:
eine Anzahl von PDSCH-Gruppen mit entsprechender HARQ-ACK-Rückmeldung, die in dem HARQ-ACK-Codebuch gemultiplext werden soll;
eine Anzahl von HARQ-ACK-Untercodebüchern in dem HARQ-ACK-Codebuch; oder
ob das erste HARQ-ACK-Untercodebuch mit dem zweiten HARQ-ACK-Untercodebuch in dem gleichen HARQ-ACK-Codebuch übertragen werden soll oder nicht.

3. UE (101, 1200) nach Anspruch 1, wobei mindestens eine der zweiten Vielzahl von DCIs eine zweite Anzeige umfasst, die anzeigt:
eine Downlink-Zuweisungsanzeige, DAI, die in einer zuletzt empfangenen DCI unter der ersten Vielzahl von DCIs angezeigt ist.

4. UE (101, 1200) nach Anspruch 3, wobei die DAI, die in der zuletzt empfangenen DCI angezeigt ist, in dem Fall eines einzelnen Trägers für die Multicast-Übertragung eine Zähler-DAI ist oder in dem Fall mehrerer Träger für die Multicast-Übertragung eine Gesamt-DAI ist.

5. UE (101, 1200) nach Anspruch 1, wobei der mindestens eine Prozessor (1206) derart konfiguriert ist, dass:
das erste HARQ-ACK-Untercodebuch vor dem HARQ-ACK-Codebuch, gefolgt von dem zweiten HARQ-ACK-Untercodebuch, platziert wird; und
eine Größe des ersten HARQ-ACK-Untercodebuchs durch Funkressourcensteuerungssignalisierung, RRC-Signalisierung, konfiguriert ist oder durch mindestens eine der ersten Vielzahl von DCIs und der zweiten Vielzahl von DCIs angezeigt wird.

6. UE (101, 1200) nach Anspruch 1, wobei der mindestens eine Prozessor (1206) derart konfiguriert ist, dass das erste HARQ-ACK-Untercodebuch an einem ersten Satz von Bitpositionen in dem HARQ-ACK-Codebuch angeordnet ist und das zweite HARQ-ACK-Untercodebuch an einem zweiten Satz von Bitpositionen in dem HARQ-ACK-Codebuch angeordnet ist.

7. UE (101, 1200) nach Anspruch 6, wobei der mindestens eine Prozessor (1206) derart konfiguriert ist, dass der erste Satz von Bitpositionen eine erste Anzahl aufeinanderfolgender Bitpositionen in dem HARQ-ACK-Codebuch einschließt und der zweite Satz von Bitpositionen die verbleibenden Bitpositionen in dem HARQ-ACK-Codebuch einschließt.

8. UE (101, 1200) nach Anspruch 7, die ferner konfiguriert ist, um Funkressourcensteuerungssignalisierung, RRC-Signalisierung, zum Konfigurieren der ersten Anzahl aus einem Satz von Kandidatenwerten zu empfangen; oder wobei die erste Anzahl aus dem Satz von Kandidatenwerten vordefiniert ist.

9. UE (101, 1200) nach Anspruch 6, wobei:
der erste Satz von Bitpositionen geradzahlige Bitpositionen in dem HARQ-ACK-Codebuch einschließt und der zweite Satz von Bitpositionen ungeradzahlige Bitpositionen in dem HARQ-ACK-Codebuch einschließt.

10. UE (101, 1200) nach Anspruch 1, wobei der mindestens eine Prozessor (1206) derart konfiguriert ist, dass:
das erste HARQ-ACK-Untercodebuch vor dem HARQ-ACK-Codebuch, gefolgt von dem zweiten HARQ-ACK-Untercodebuch, platziert wird; und
das HARQ-ACK-Codebuch ferner eine Downlink-Zuweisungsanzeige, DAI, einschließt, die mit der DAI in einer zuletzt empfangenen DCI unter der ersten Vielzahl von DCIs identisch ist.

11. UE (101, 1200) nach Anspruch 1, wobei der mindestens eine Prozessor (1206) derart konfiguriert ist, dass das HARQ-ACK-Codebuch eine HARQ-ACK-Rückmeldung für eine DCI einschließt, die eine Freigabe einer semi-persistenten Planungs-PDSCH, SPS-PDSCH, für eine Multicast-Übertragung anzeigt.

12. Basisstation, BS, (102, 1200) für eine drahtlose Kommunikation, die BS (102, 1200) umfassend:
mindestens einen Speicher (1201); und
mindestens einen Prozessor (1206), der mit dem mindestens einen Speicher (1201) gekoppelt und konfiguriert ist, um die BS zu veranlassen zum:
Übertragen, an eine Gruppe von Benutzereinrichtungen, UE, einschließlich einer ersten UE, einer ersten Vielzahl von Downlink-Steuerinformationen, DCIs, die ein erstes DCI-Format zum Planen einer ersten Gruppe gemeinsam genutzter physischer Downlink-Kanäle, PDSCHs, aufweisen;
Übertragen, an die erste UE, einer zweiten Vielzahl von DCIs, die ein zweites DCI-Format zum Planen einer zweiten Gruppe von PDSCHs aufweisen,
wobei eine zyklische Redundanzprüfung, CRC, jeder der ersten Vielzahl von DCIs durch eine erste temporäre Funknetzkennung, RNTI, verschlüsselt wird, die für eine Gruppe von UEs einschließlich der UE konfiguriert ist, und wobei eine CRC jeder der zweiten Vielzahl von DCIs durch eine zweite RNTI verschlüsselt wird, die speziell für die UE konfiguriert ist; und
Empfangen, von der ersten UE, eines HARQ-ACK-Codebuchs, das ein erstes HARQ-ACK-Untercodebuch für die erste Gruppe von PDSCHs einschließt und ein zweites HARQ-ACK-Untercodebuch für die zweite Gruppe von PDSCHs einschließt.

13. Verfahren für eine drahtlose Kommunikation, das durch eine Benutzereinrichtung, UE, durchgeführt wird, das Verfahren umfassend:
Empfangen einer ersten Vielzahl von Downlink-Steuerinformationen, DCIs, die ein erstes DCI-Format zum Planen einer ersten Gruppe gemeinsam genutzter physischer Downlink-Kanäle, PDSCHs, aufweisen, und einer zweiten Vielzahl von DCIs, die ein zweites DCI-Format zum Planen einer zweiten Gruppe von PDSCHs aufweisen,
wobei eine zyklische Redundanzprüfung, CRC, jeder der ersten Vielzahl von DCIs durch eine erste temporäre Funknetzkennung, RNTI, verschlüsselt wird, die für eine Gruppe von UEs einschließlich der UE konfiguriert ist, und wobei eine CRC jeder der zweiten Vielzahl von DCIs durch eine zweite RNTI verschlüsselt wird, die speziell für die UE konfiguriert ist, und
wobei eine hybride automatische Wiederholungsanforderungsbestätigungsrückmeldung, HARQ-ACK-Rückmeldung, für die erste Gruppe von PDSCHs und eine HARQ-ACK-Rückmeldung für die zweite Gruppe von PDSCHs in einem gleichen HARQ-ACK-Codebuch übertragen werden sollen;
Erzeugen eines ersten HARQ-ACK-Untercodebuchs für die erste Gruppe von PDSCHs und eines zweiten HARQ-ACK-Untercodebuchs für die zweite Gruppe von PDSCHs; und
Übertragen des HARQ-ACK-Codebuchs einschließlich des ersten HARQ-ACKUntercodebuchs und des zweiten HARQ-ACK-Untercodebuchs.

14. Verfahren nach Anspruch 13, wobei das HARQ-ACK-Codebuch eine HARQ-ACK-Rückmeldung für eine DCI einschließt, die eine Freigabe einer semipersistenten Planungs-PDSCH, SPS-PDSCH, für eine Multicast-Übertragung anzeigt.

15. Prozessor (1206) für eine Benutzereinrichtung, UE, (101) für eine drahtlose Kommunikation, wobei der Prozessor (1206) konfiguriert ist, um die UE (101) zu veranlassen zum:
Empfangen einer ersten Vielzahl von Downlink-Steuerinformationen, DCIs, die ein erstes DCI-Format zum Planen einer ersten Gruppe gemeinsam genutzter physischer Downlink-Kanäle, PDSCHs, aufweisen, und einer zweiten Vielzahl von DCIs, die ein zweites DCI-Format zum Planen einer zweiten Gruppe von PDSCHs aufweisen,
wobei eine zyklische Redundanzprüfung, CRC, jeder der ersten Vielzahl von DCIs durch eine erste temporäre Funknetzkennung, RNTI, verschlüsselt wird, die für eine Gruppe von UEs einschließlich der UE (101, 1200) konfiguriert ist, und wobei eine CRC jeder der zweiten Vielzahl von DCIs durch eine zweite RNTI verschlüsselt wird, die speziell für die UE (101, 1200) konfiguriert ist, und
wobei eine hybride automatische Wiederholungsanforderungsbestätigungsrückmeldung, HARQ-ACK-Rückmeldung, für die erste Gruppe von PDSCHs und eine HARQ-ACK-Rückmeldung für die zweite Gruppe von PDSCHs in einem gleichen HARQ-ACK-Codebuch übertragen werden sollen;
Erzeugen eines ersten HARQ-ACK-Untercodebuchs für die erste Gruppe von PDSCHs und eines zweiten HARQ-ACK-Untercodebuchs für die zweite Gruppe von PDSCHs; und
Übertragen des HARQ-ACK-Codebuch einschließlich des ersten HARQ-ACK-Untercodebuchs und des zweiten HARQ-ACK-Untercodebuchs.

## Revendications

1. Équipement utilisateur, UE, (101, 1200) destiné à une communication sans fil, l'UE (101, 1200) comprenant :
au moins une mémoire (1201) ; et
au moins un processeur (1206) couplé à l'au moins une mémoire (1201) et configuré pour amener l'UE (101, 1200) à :
recevoir une première pluralité d'informations de commande de liaison descendante, DCI, ayant un premier format DCI pour planifier un premier groupe de canaux partagés de liaison descendante physique, PDSCH, et une seconde pluralité de DCI ayant un second format DCI pour planifier un second groupe de PDSCH,
dans lequel un contrôle de redondance cyclique, CRC, de chacune de la première pluralité de DCI est brouillé par un premier identificateur temporaire de réseau radio, RNTI, qui est configuré pour un groupe d'UE comportant l'UE (101, 1200), et dans lequel un CRC de chacune de la seconde pluralité de DCI est brouillé par un second RNTI qui est configuré spécifiquement pour l'UE (101, 1200), et
dans lequel un retour d'informations d'accusé de réception de demande de répétition automatique hybride, HARQ-ACK, pour le premier groupe de PDSCH et le retour d'informations HARQ-ACK pour le second groupe de PDSCH doit être transmis dans un même livre de codes HARQ-ACK ;
générer un premier sous-livre de codes HARQ-ACK pour le premier groupe de PDSCH et un second sous-livre de codes HARQ-ACK pour le second groupe de PDSCH ; et
transmettre le livre de codes HARQ-ACK comportant le premier sous-livre de codes HARQ-ACK et le second sous-livre de codes HARQ-ACK.

2. UE (101, 1200) selon la revendication 1, dans lequel au moins l'une parmi la seconde pluralité de DCI comporte un premier indicateur indiquant :
un certain nombre de groupes PDSCH avec des retours d'informations HARQ-ACK correspondants à multiplexer dans le livre de codes HARQ-ACK ;
un certain nombre de sous-livres de codes HARQ-ACK dans le livre de codes HARQ-ACK ; ou
si le premier sous-livre de codes HARQ-ACK doit être transmis avec le second sous-livre de codes HARQ-ACK dans le même livre de codes HARQ-ACK ou non.

3. UE (101, 1200) selon la revendication 1, dans lequel au moins l'une parmi la seconde pluralité de DCI comporte un second indicateur indiquant :
un indicateur d'attribution de liaison descendante, DAI, indiqué dans une dernière DCI reçue parmi la première pluralité de DCI.

4. UE (101, 1200) selon la revendication 3, dans lequel le DAI indiqué dans la dernière DCI reçue est un DAI de compteur dans le cas d'une porteuse unique pour une transmission multi-diffusion, ou un DAI total dans le cas de multiples porteuses pour une transmission multi-diffusion.

5. UE (101, 1200) selon la revendication 1, dans lequel l'au moins un processeur (1206) est configuré de telle sorte que :
le premier sous-livre de codes HARQ-ACK est placé en tête du livre de codes HARQ-ACK, suivi du second sous-livre de codes HARQ-ACK ; et
une taille du premier sous-livre de codes HARQ-ACK est configurée par une signalisation de commande de ressources radio, RRC, ou indiquée par au moins l'un parmi la première pluralité de DCI et la seconde pluralité de DCI.

6. UE (101, 1200) selon la revendication 1, dans lequel l'au moins un processeur (1206) est configuré de telle sorte que le premier sous-livre de codes HARQ-ACK est agencé au niveau d'un premier ensemble de positions de bits dans le livre de codes HARQ-ACK, et le second sous-livre de codes HARQ-ACK est agencé au niveau d'un second ensemble de positions de bits dans le livre de codes HARQ-ACK.

7. UE (101, 1200) selon la revendication 6, dans lequel l'au moins un processeur (1206) est configuré de telle sorte que le premier ensemble de positions de bits comporte un premier nombre de positions de bits consécutives dans le livre de codes HARQ-ACK et le second ensemble de positions de bits comporte les positions de bits restantes dans le livre de codes HARQ-ACK.

8. UE (101, 1200) selon la revendication 7, configuré en outre pour recevoir une signalisation de commande de ressources radio, RRC, pour configurer le premier nombre à partir d'un ensemble de valeurs candidates ; ou dans lequel le premier nombre est prédéfini à partir de l'ensemble des valeurs candidates.

9. UE (101, 1200) selon la revendication 6, dans lequel :
le premier ensemble de positions de bits comporte des positions de bits paires dans le livre de codes HARQ-ACK et le second ensemble de positions de bits comporte des positions de bits impaires dans le livre de codes HARQ-ACK.

10. UE (101, 1200) selon la revendication 1, dans lequel l'au moins un processeur (1206) est configuré de telle sorte que :
le premier sous-livre de codes HARQ-ACK est placé en tête du livre de codes HARQ-ACK, suivi du second sous-livre de codes HARQ-ACK ; et
le livre de codes HARQ-ACK comporte en outre un indicateur d'attribution de liaison descendante, DAI, identique au DAI d'une dernière DCI reçue parmi la première pluralité de DCI.

11. UE (101, 1200) selon la revendication 1, dans lequel l'au moins un processeur (1206) est configuré de telle sorte que le livre de codes HARQ-ACK comporte un retour d'informations HARQ-ACK pour une DCI indiquant une libération d'une planification semi-persistante, SPS, PDSCH pour une transmission multi-diffusion.

12. Station de base, BS, (102, 1200) destinée à une communication sans fil, la BS (102, 1200) comprenant :
au moins une mémoire (1201) ; et
au moins un processeur (1206) couplé à l'au moins une mémoire (1201) et configuré pour amener la BS à :
transmettre, à un groupe d'équipements utilisateur, UE, comportant un premier UE, une première pluralité d'informations de commande de liaison descendante, DCI, ayant un premier format DCI pour planifier un premier groupe de canaux partagés de liaison descendante physique, PDSCH ;
transmettre, au premier UE, une seconde pluralité de DCI ayant un second format DCI pour planifier un second groupe de PDSCH,
dans laquelle un contrôle de redondance cyclique, CRC, de chacune de la première pluralité de DCI est brouillé par un premier identificateur temporaire de réseau radio, RNTI, configuré pour un groupe d'UE comportant l'UE, et dans laquelle un CRC de chacune de la seconde pluralité de DCI est brouillé par un second RNTI configuré spécifiquement pour l'UE ; et
recevoir, en provenance du premier UE, un livre de codes HARQ-ACK comportant un premier sous-livre de codes HARQ-ACK pour le premier groupe de PDSCH et un second sous-livre de codes HARQ-ACK pour le second groupe de PDSCH.

13. Procédé destiné à une communication sans fil réalisé par un équipement utilisateur, UE, le procédé comprenant :
la réception d'une première pluralité d'informations de commande de liaison descendante, DCI, ayant un premier format DCI pour planifier un premier groupe de canaux partagés de liaison descendante physique, PDSCH, et d'une seconde pluralité de DCI ayant un second format DCI pour planifier un second groupe de PDSCH,
dans lequel un contrôle de redondance cyclique, CRC, de chacun de la première pluralité de DCI est brouillé par un premier identificateur temporaire de réseau radio, RNTI, configuré pour un groupe d'UE comportant l'UE, et dans lequel un CRC de chacun de la seconde pluralité de DCI est brouillé par un second RNTI configuré spécifiquement pour l'UE, et
dans lequel un retour d'informations d'accusé de réception de demande de répétition automatique hybride, HARQ-ACK, pour le premier groupe de PDSCH et le retour d'informations HARQ-ACK pour le second groupe de PDSCH doit être transmis dans un même livre de codes HARQ-ACK ;
la génération d'un premier sous-livre de codes HARQ-ACK pour le premier groupe de PDSCH et d'un second sous-livre de codes HARQ-ACK pour le second groupe de PDSCH ; et
la transmission du livre de codes HARQ-ACK comportant le premier sous-livre de codes HARQ-ACK et le second sous-livre de codes HARQ-ACK.

14. Procédé selon la revendication 13, dans lequel le livre de codes HARQ-ACK comporte un retour d'informations HARQ-ACK pour une DCI indiquant une libération d'une planification semi-persistante, SPS, PDSCH pour une transmission multi-diffusion.

15. Processeur (1206) destiné à un équipement utilisateur, UE, (101) destiné à une communication sans fil, le processeur (1206) étant configuré pour amener l'UE (101) à :
recevoir une première pluralité d'informations de commande de liaison descendante, DCI, ayant un premier format DCI pour planifier un premier groupe de canaux partagés de liaison descendante physique, PDSCH, et une seconde pluralité de DCI ayant un second format DCI pour planifier un second groupe de PDSCH,
dans lequel un contrôle de redondance cyclique, CRC, de chacune de la première pluralité de DCI est brouillé par un premier identificateur temporaire de réseau radio, RNTI, qui est configuré pour un groupe d'UE comportant l'UE (101, 1200), et dans lequel un CRC de chacune de la seconde pluralité de DCI est brouillé par un second RNTI qui est configuré spécifiquement pour l'UE (101, 1200), et
dans lequel un retour d'informations d'accusé de réception de demande de répétition automatique hybride, HARQ-ACK, pour le premier groupe de PDSCH et le retour d'informations HARQ-ACK pour le second groupe de PDSCH doit être transmis dans un même livre de codes HARQ-ACK ;
générer un premier sous-livre de codes HARQ-ACK pour le premier groupe de PDSCH et un second sous-livre de codes HARQ-ACK pour le second groupe de PDSCH ; et
transmettre le livre de codes HARQ-ACK comportant le premier sous-livre de codes HARQ-ACK et le second sous-livre de codes HARQ-ACK.
